# EUROPEAN PATENT SPECIFICATION

(11) **EP 4 608 122 B1**
(45) Date of publication and mention of the grant of the patent: **07.10.2026**
(21) Application number: 23714349.0
(22) Date of filing: 28.02.2023
(51) Int. Cl.: A01D 34/416, A01D 34/42, A01D 34/43, A01G 17/02, A01M 21/02

(54) **ACCESSORY FOR SHOOT TIPPING MACHINES AND SHOOT TIPPING MACHINE PROVIDED WITH SAID ACCESSORY**
ZUBEHÖR FÜR SCHUSSKIPPMASCHINEN UND SCHUSSKIPPMASCHINE MIT DIESEM ZUBEHÖR
ACCESSOIRE POUR MACHINES À BASCULER LES TIRS ET MACHINE À BASCULER LES TIRS MUNIE DE CET ACCESSOIRE

(30) Priority: 25.10.2022 IT 202200021981
(43) Date of publication of application: 03.09.2025
(73) Proprietor: Di Dio Vitali, Massimo, 14046 Mombaruzzo (AT) (IT)
(72) Inventor: Di Dio Vitali, Massimo, 14046 Mombaruzzo (AT) (IT)
(74) Representative: Mozzanica, Luca
(86) International application number: PCT/IT2023/050061
(87) International publication number: WO 2024/089717

(56) References cited:
- US-A- 4 301 646
- US-A- 4 815 261
- US-A1- 2008 060 335

## Description

### Field of application of the invention

The present invention applies to the field of arboriculture, and in particular to wine growing. The present invention in particular relates to shoot tipping machines, i.e., agricultural machines connectable to vehicles commonly referred to as "agricultural tractors" (i.e., vehicles suitable for circulating outside the road network and provided with one or more power transmission devices for actuating the shoot tipping machines and other agricultural machines connectable to said devices) for removing weeds, small spontaneous shrubs and side shoots undesirably grown about the stems of plants cultivated in rows (such as, for example, grape vines).

As is known, shoot tipping machines comprise a plurality of externally flexible wires, commonly referred to as "flails", connected at one end to a shaft pneumatically or hydraulically rotatable about the longitudinal axis thereof by means of power which is transmitted to the aforesaid shaft by the agricultural tractor to which the shoot tipping machine is connected. An example of such a machine is disclosed in US 4815261 A1.

The present invention relates to an accessory connectable to a shoot tipping machine. The present invention further relates to an agricultural machine comprising a shoot tipping machine and the aforesaid accessory connected thereto. Shoot tipping machines are commonly used in wine growing. For convenience of disclosure, in the present description reference will be made to the employment of a shoot tipping machine for removing grass, small shrubs and side shoots under the rows of a grape plantation. However, shoot tipping machines, as well as the accessory to which the present invention refers, are generally employable in arboriculture.

### Overview of the background art

When there is a need to remove grass, small shrubs and side shoots under a row of a grape plantation, it is required to connect a shoot tipping machine to an agricultural tractor and actuate the latter so as to translate the shoot tipping machine parallel to the row close to both the ground and the stems of the grape vines. The flails, like the wires of brush cutters, tend to cut the vegetation against which they impact while rotating. The flails also impact against the stems of grape vines but the latter are generally so sturdy that they are not cut by the flails. The impact of the flails against the stems of the grape vines however causes damage thereto. The flails can also undesirably cut the so-called "rooted shoots".

### Objects of the invention

It is the object of the present invention to overcome the aforesaid drawbacks by indicating an accessory for shoot tipping machines which at least partially prevents the undesired impact of the flails of a shoot tipping machine against the stems of plants involved in arboriculture, thus simultaneously allowing the removal of weeds, small spontaneous shrubs and side shoots which have undesirably grown at the base of the aforesaid plants.

### Summary and advantages of the invention

The object of the present invention is a device connectable to a shoot tipping machine at a portion of the latter facing the stem of a plant when the shoot tipping machine is opposed to said stem in order to remove side shoots of said plant, i.e., a device connectable to a shoot tipping machine so that when the shoot tipping machine is opposed to the stem of a plant to remove side shoots of said plant, said device is at least partially interposed between the rotating shaft to which the flails of the shoot tipping machine are connected and said stem.

More precisely, the object of the invention is a device connectable to a shoot tipping machine,
said shoot tipping machine comprising:
   - a casing at least partially delimiting a seat,
      said casing including at least one opening for accessing said seat,
      said shoot tipping machine being opposable to the stem of a plant (to remove side shoots of said plant) at said opening;
   - a shaft accommodated in said seat and rotatable about a first rotation axis, preferably coincident with the longitudinal axis of said shaft;
   - a plurality of flails, each of which connected to said shaft at a first end thereof,
      upon a rotation of said shaft about said first axis, each of said flails, during a time interval of the rotation period thereof, protruding from said opening at at least one end section thereof including a second end of said flail opposite to said first end thereof,
said device comprising:
   - a frame connectable to said shoot tipping machine;
   - one or more plates (intended as bodies having two dimensions prevailing over the third dimension, corresponding to the thickness), each of which connected to said frame so as to rotate about a second rotation axis,
      each of said one or more plates being also connected to said frame so that when said frame is connected to said shoot tipping machine:
         - each of said plates is at least partially opposed to said opening,
         - during a shoot tipping operation carried out with said shoot tipping machine, each of said plates is not in contact with the ground
            and
         - when said shoot tipping machine is opposed to the stem of a plant (to remove side shoots of said plant) at said opening, at least one of said plates is at least partially interposed between said opening and said stem of said plant,
      each of said one or more plates being rotatable, with respect to said frame, about said second axis, between at least:
         - a first position at which, when said frame is connected to said shoot tipping machine, said plate at least partially obstructs said opening so that, upon a rotation of said shaft about said first axis, rather than protruding from said opening, at least one group of flails of said plurality impacts against said plate at said respective end sections of said flails of said group, and during said respective time intervals of said rotation periods of said flails of said group
            and
         - a second position at which, when said frame is connected to said shoot tipping machine, said plate does not obstruct, or only partially obstructs, said opening so that, upon a rotation of said shaft about said first axis, some or all the flails of said group protrude from said opening at said respective end sections and during said respective time intervals of the rotation periods thereof,
            when said frame is connected to said shoot tipping machine, an impact of the flails of said group against said plate when the latter is in said first position tending to rotate said plate to said second position,
if said device comprises only one of said plates:
   - when said frame is connected to said shoot tipping machine and said shoot tipping machine is opposed to the stem of a plant (to remove side shoots of said plant) at said opening, said plate being at least partially interposed between said opening and said stem of said plant,
   - when said frame is connected to said shoot tipping machine and said plate is in said first position, said plate at least partially obstructing said opening so that, upon a rotation of said shaft about said first axis, rather than protruding from said opening, all the flails of said plurality impact against said plate at said respective end sections and during said respective time intervals of the rotation periods thereof
      and
   - when said frame is connected to said shoot tipping machine and said plate is in said second position, said plate not obstructing, or only partially obstructing, said opening so that, upon a rotation of said shaft about said first axis, at least some of the flails of said plurality protrude from said opening at said respective end sections and during said respective time intervals of the rotation periods thereof,
if, conversely, said device comprises said multiple plates, when said frame is connected to said shoot tipping machine and each of said plates is in said first position, said plates, as a whole, at least partially obstructing said opening so that, upon a rotation of said shaft about said first axis, rather than protruding from said opening, all the flails of said plurality impact against said plates at said respective end sections and during said respective time intervals of the rotation periods thereof,
each of said one or more plates being connected to said frame so that, when said frame is connected to said shoot tipping machine during a shoot tipping operation carried out with said shoot tipping machine and said plate is in said second position, upon a movement of said shoot tipping machine parallel to the ground, an impact of said plate against the stem of a plant tends to rotate said plate to said first position.

Once the device of the invention has been connected to a shoot tipping machine, the latter is placed at an end of a row from which weeds, small spontaneous shrubs and side shoots are to be removed. The shoot tipping machine is then actuated by rotating the shaft of the shoot tipping machine, together with the flails, about the first axis. The latter, impacting against the plate of the device, or against the multiple plates when more than one, push said plate, or each of said plates, to the second position. As specified above, in this position the flails, by rotating, cut the undesired elements against which they impact at the base of the row. By advancing the shoot tipping machine parallel to the ground and the row, when the plate, or one of the plates when more than one, impacts against the stem of a cultivated plant (of the row), the plate protects the stem of the plant from the flails. More precisely, as the shoot tipping machine advances, the relative motion between the plate and the stem rotates the plate towards the first position so as to continue protecting the stem of the plant from the flails as the shoot tipping machine passes in front of said stem. After the shoot tipping machine has passed beyond the stem of the plant, the flails, impacting against the aforesaid plate, bring the latter to the second position so as to start again to remove weeds, small spontaneous shrubs and side shoots.

In light of the foregoing, the device of the invention at least partially prevents the undesired impact of the flails of a shoot tipping machine against the stems of plants involved in arboriculture while simultaneously allowing the removal of weeds, small spontaneous shrubs and side shoots which have undesirably grown at the base of the aforesaid plants.

Incidentally, during a shoot tipping operation carried out by employing a shoot tipping machine to which the device of the invention is connected, when the weeds, small spontaneous shrubs and side shoots impact against the plate, or against one of the plates when more than one, upon a translation of the shoot tipping machine to the second position, they are not able to overcome the push of the flails against said plate and therefore, are not able to rotate said plate to the first position. Therefore, the side shoots bend upon an advancement of the shoot tipping machine and pass under said plate, thereby being hit by the flails. Other innovative features of the present invention are disclosed in the description below and mentioned in the dependent claims.

According to an aspect of the invention, said frame comprises:
- a first load-bearing structure connectable to said shoot tipping machine so as to rotate with respect to the latter about a third rotation axis,
   said frame thus being connectable to said shoot tipping machine at said first load-bearing structure,
   when said first load-bearing structure is connected to said shoot tipping machine, said third rotation axis not being orthogonal to said first rotation axis. To avoid any misunderstanding, two axes can be orthogonal to each other, even if they are slanted. Indeed, regardless of being coplanar or slanted, two axes are mutually orthogonal if, inserted in a Cartesian space, the scalar product of the director vectors is null;
- first fastening means applicable to said first load-bearing structure and said shoot tipping machine,
   said first fastening means being applied to said first load-bearing structure and said shoot tipping machine when said first load-bearing structure is connected to said shoot tipping machine,
   said first fastening means, when applied to said first load-bearing structure and said shoot tipping machine, being suitable for preventing a rotation between said first load-bearing structure and said shoot tipping machine so as to connect them integrally to each other,
   said first fastening means, when applied to said first load-bearing structure and said shoot tipping machine, also being:
      - removable from said first load-bearing structure and said shoot tipping machine so as to allow a rotation between said first load-bearing structure and said shoot tipping machine when said first load-bearing structure is connected to said shoot tipping machine
         and then
      - re-applicable to said first load-bearing structure and said shoot tipping machine so as to prevent again a rotation between said first load-bearing structure and said shoot tipping machine;
- a second load-bearing structure connected to said first load-bearing structure so as to translate, with respect to the latter, in both a first direction and a second direction not parallel to said first direction,
   said first direction not being parallel to said third axis,
   said second direction not being parallel to said third axis,
- second and third fastening means applied to said first and second load-bearing structures and adapted to prevent a translation between said first and second load-bearing structures in said first and second directions, respectively, so as to connect integrally said first and second load-bearing structures to each other,
   said second and third fastening means also being, independently of each other (said second fastening means of said third fastening means and vice versa):
   - removable from said first and second load-bearing structures so as to allow a translation between said first and second load-bearing structures along said first and second directions, respectively
      and then
   - re-applicable to said first and second load-bearing structures so as to prevent again a translation between said first and second load-bearing structures along said first and second directions, respectively,
   each of said one or more plates being connected to said frame at said second load-bearing structure and so that said second rotation axis of said plate is not parallel to said third axis.

Advantageously:
- when the device of the invention is connected to a shoot tipping machine, the first fastening means allow adjusting the inclination of the first load-bearing structure with respect to the shoot tipping machine
   and
- the second and third fastening means allow adjusting the position of the second load-bearing structure with respect to the first load-bearing structure.

According to another aspect of the invention, said first load-bearing structure is connectable to said shoot tipping machine so that said third axis is parallel to said first axis,
said first and second directions being orthogonal to each other,
each of said first and second directions being orthogonal to said third axis,
for each of said one or more plates, said second rotation axis being orthogonal to said third axis.

Advantageously, when the device of the invention is connected to a shoot tipping machine and the shoot tipping of a row employing said shoot tipping machine is underway:
- the first fastening means allow adjusting the inclination of the rotation axis of the plate, or of each plate when more than one, with respect to the ground. Indeed, if the ground subjected to shoot tipping is inclined with respect to the ground where the agricultural tractor is passing, it is convenient to tilt the first load-bearing structure with respect to the shoot tipping machine so that the rotation axis of the plate, of each plate when more than one, is arranged orthogonal to the ground subjected to shoot tipping
   and
- the second and third fastening means allow adjusting, as a whole, the distance of the second load-bearing structure, and therefore of the plate, or of each plate when more than one, from the ground subjected to shoot tipping and from the opening of the shoot tipping machine.

According to another aspect of the invention, for each of said one or more plates, said second axis is orthogonal to said second direction.

According to another aspect of the invention, said frame comprises spacer means connected to said second load-bearing structure,
both said plate, or each of said plates when more than one, when in said first position, and said spacer means extending away from said second load-bearing structure substantially in the same direction,
said spacer means extending away from said second load-bearing structure more than said plate, or each of said plates when more than one, extends away from said load-bearing structure, when in said first position.

The spacer means advantageously ensure the plate, or each plate when more than one, is kept raised off the ground when the device of the invention is connected to a shoot tipping machine and the latter is employed in a shoot tipping operation.

The spacer means also prevent the plate, or each plate when more than one, from undesirably coming into contact with the ground also upon a rotation of the first support structure with respect to the shoot tipping machine or a translation of the second support structure with respect to the first support structure. This is an advantage since were the plate, or one of the plates when more than one, to undesirably come into contact with the ground, said plate could be damaged following the rubbing against the ground during a shoot tipping operation, or the contact with the ground could undesirably prevent said plate from rotating about the rotation axis thereof.

According to another aspect of the invention, said first fastening means comprise at least a first actuator connectable to said first load-bearing structure and said shoot tipping machine so that an actuation of said first actuator results in a rotation of said first load-bearing structure with respect to said shoot tipping machine about said third axis,
when said first load-bearing structure is connected to said shoot tipping machine, said first actuator being connected to said first load-bearing structure and said shoot tipping machine,
said first actuator, when connected to said first load-bearing structure and said shoot tipping machine, and not actuated, preventing a rotation between said first load-bearing structure and said shoot tipping machine,
an actuation of said first actuator corresponding to a removal of said first fastening means from said first load-bearing structure and said shoot tipping machine,
a stop (i.e., a non-actuation) of said first actuator following an actuation thereof corresponding to a re-application of said first fastening means to said first load-bearing structure and said shoot tipping machine.

According to another aspect of the invention, said second fastening means comprise at least a second actuator connected to said first and second load-bearing structures so that an actuation of said second actuator results in a translation of said second load-bearing structure with respect to said first load-bearing structure in said first direction,
said second actuator, when not actuated, preventing a translation of said second load-bearing structure with respect to said first load-bearing structure in said first direction,
an actuation of said second actuator corresponding to a removal of said second fastening means from said first and second load-bearing structures,
a stop (i.e., a non-actuation) of said second actuator following an actuation thereof corresponding to a re-application of said second fastening means to said first and second load-bearing structures.

According to another aspect of the invention, said third fastening means comprise at least a third actuator connected to said first and second load-bearing structures so that an actuation of said third actuator results in a translation of said second load-bearing structure with respect to said first load-bearing structure in said second direction,
said third actuator, when not actuated, preventing a translation of said second load-bearing structure with respect to said first load-bearing structure in said second direction,
an actuation of said third actuator corresponding to a removal of said third fastening means from said first and second load-bearing structures,
a stop (i.e., a non-actuation) of said third actuator following an actuation thereof corresponding to a re-application of said third fastening means to said first and second load-bearing structures.

According to another aspect of the invention, if said device comprises said multiple plates, said second axes are coplanar and mutually parallel.

Another object of the invention is an apparatus comprising:
- a shoot tipping machine including:
   - a casing at least partially delimiting a seat,
      said casing including at least one opening for accessing said seat,
      said shoot tipping machine being opposable to the stem of a plant (to remove side shoots of said plant) at said opening;
   - a shaft accommodated in said seat and rotatable about a first rotation axis;
   - a plurality of flails, each of which connected to said shaft at a first end thereof,
      upon a rotation of said shaft about said first axis, each of said flails, during a time interval of the rotation period thereof, protruding from said opening at at least one end section thereof including a second end of said flail opposite to said first end thereof;
- the device of the invention with said frame connected to said shoot tipping machine.

### Brief description of the drawings

Further objects and advantages of the present invention will become apparent from the following detailed description of exemplary embodiments thereof and from the accompanying drawings, merely provided by way of non-limiting explanation, in which:
- **Figure 1** shows a perspective view of a device according to the present invention;
- **Figure 2** shows a perspective view of an apparatus according to the present invention, comprising the device in Figure 1 connected to a shoot tipping machine;
- **Figures 3 to 9** show a diagrammatic top view of respective steps of a shoot tipping operation carried out employing the apparatus in Figure 2.

### Detailed description of some preferred embodiments of the invention

Hereinafter in the present description, a figure can also be illustrated with reference to elements not expressly indicated therein but indicated in other figures instead. The scale and proportions of the various elements depicted do not necessarily correspond to the real ones.

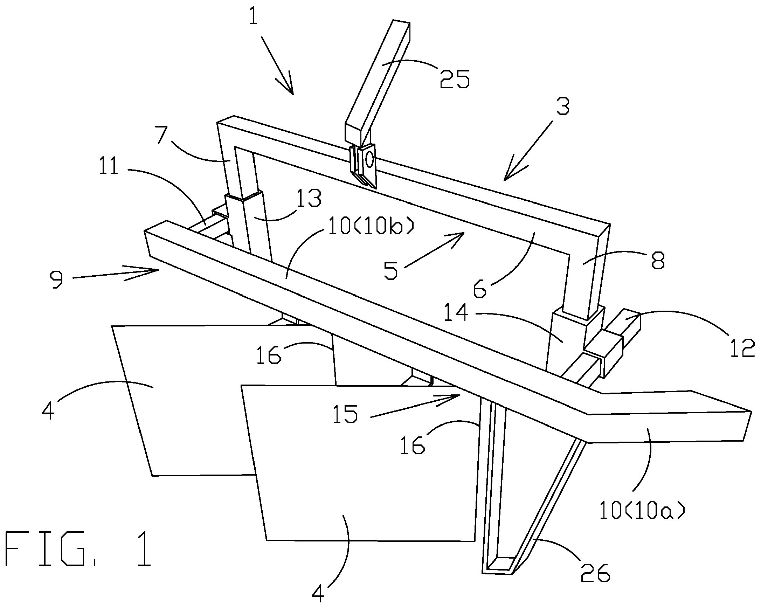

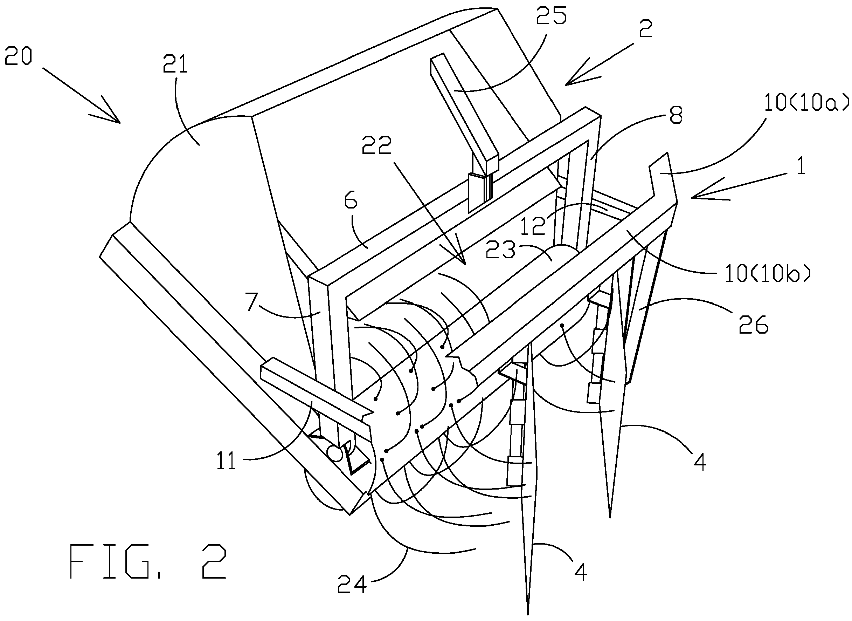

**Figure 1** shows a device 1 of the invention, connectable to a shoot tipping machine 2 (shown in Figure 2). Device 1 comprises a frame 3 to which multiple plates 4 are connected, by way of example two in number. Device 1 is connectable to the shoot tipping machine 2 at frame 3.

Frame 3 preferably comprises a first load-bearing structure 5, preferably including three bars 6, 7 and 8 connected integrally and mutually at the ends thereof so as to give structure 5 a substantially upside-down "U" shape, i.e., with the concavity of the "U" facing downwards in Figure 1. More precisely, bar 6, arranged at the top in Figure 1, is preferably connected, at the ends thereof, to bars 7 and 8, respectively. Bar 7 (on the left in Figure 1) is connected, at an end thereof, to an end of bar 6, preferably orthogonal to the latter and extending downwards in Figure 1. Similarly, bar 8 (on the right in Figure 1) is connected, at an end thereof, to the other end of bar 6, preferably orthogonal to the latter and extending downwards in Figure 1. The bars 6, 7, and 8 are preferably rectilinear. The bars 7 and 8 are preferably mutually parallel (and thus, substantially coplanar both to each other and to bar 6), are opposed to each other and are preferably equal to each other.

Frame 3 is connectable to the shoot tipping machine 2 preferably at structure 5, and in particular, as shown later in the present description, at bars 7 and 8.

Frame 3 preferably also comprises a second load-bearing structure 9 connected to structure 5 so as to translate with respect to the latter, both in a first direction preferably parallel to the bars 7 and 8 and in a second direction not parallel to the aforesaid first direction, preferably orthogonal to the aforesaid first direction (and therefore, also to the bars 7 and 8) and more preferably, in addition to orthogonal to the aforesaid first direction, orthogonal to bar 6. Similar to structure 5, structure 9 preferably includes three bars 10, 11 and 12 connected integrally and mutually so as to give structure 9 a substantially "U"-shaped shape. More precisely, bar 10 is preferably connected, at an end thereof, to bar 11 (on the left in Figure 1), and close to the other end, to bar 12 (on the right in Figure 1). Bar 11 is connected, at an end thereof, to an end of bar 10, preferably orthogonal to the latter. Bar 12 is connected, at an end thereof, to bar 10, preferably orthogonal to the latter. Bar 10 preferably extends for a section 10a past bar 12. Said section 10a is preferably inclined with respect to the remaining section 10b of bar 10 (included between the bars 11 and 12) and is preferably coplanar to the latter. Section 10a is preferably shorter than section 10b. The bars 11 and 12 and each of the sections 10a and 10b of bar 10 are preferably rectilinear. The bars 11 and 12 are preferably mutually parallel (and thus, substantially coplanar both to each other and to the section 10b of bar 10), are opposed to each other and are preferably equal to each other.

As mentioned above, structure 9 is connected to structure 5 so as to translate with respect to the latter to the aforesaid first and second positions. The connection between the structures 5 and 9 is preferably obtained by means of a pair of substantially cross-shaped joints 13 and 14. Each of the joints 13 and 14 preferably comprises a pair of short rectilinear tubular elements placed beside each other, mutually orthogonal and connected integrally to each other. A tubular element of joint 13 (on the left in Figure 1) accommodates a section of bar 7 and the other tubular element of joint 13 accommodates a section of bar 11. The tubular element of joint 13 accommodating bar 7 is significantly shorter than the latter. Similarly, the other tubular element of joint 13 accommodating bar 11 is significantly shorter than the latter. The section of bar 7 accommodated in one of the two tubular elements of joint 13 preferably matches the inner face of said tubular element. The latter allows, and simultaneously constrains, bar 7 to translate longitudinally in said tubular element. Similarly, the section of bar 11 accommodated in the other tubular element of joint 13 preferably matches the inner face of said other tubular element. The latter allows, and simultaneously constrains, bar 11 to translate longitudinally in said other tubular element.

Similarly to that said for joint 13, a tubular element of joint 14 (on the right in Figure 1) accommodates a section of bar 8 and the other tubular element of joint 14 accommodates a section of bar 12. The tubular element of joint 14 accommodating bar 8 is significantly shorter than the latter. Similarly, the other tubular element of joint 14 accommodating bar 12 is significantly shorter than the latter. The section of bar 8 accommodated in one of the two tubular elements of joint 14 preferably matches the inner face of said tubular element. The latter allows, and simultaneously constrains, bar 8 to translate longitudinally in said tubular element. Similarly, the section of bar 12 accommodated in the other tubular element of joint 14 preferably matches the inner face of said other tubular element. The latter allows, and simultaneously constrains, bar 12 to translate longitudinally in said other tubular element.

In light of the foregoing, structure 5 is connected to structure 9 preferably at the bars 7 and 8, and structure 9 is connected to structure 5 preferably at the bars 11 and 12. Structure 9 is connected to structure 5 with the concavity of the "U" as the structure 9 facing structure 5 is substantially shaped. The section 10a of bar 10 is inclined so as to lie on the same side where structure 5 lies with respect to the plane in which the bars 11 and 12 and the section 10b of bar 10 substantially lie. As mentioned above, the aforesaid first translation direction between the structures 5 and 9 is preferably parallel to the bars 7 and 8. Said first direction is also preferably orthogonal both to the section 10b of bar 10 and to the bars 11 and 12. The aforesaid second translation direction between the structures 5 and 9 is preferably orthogonal to the bars 7 and 8, and more preferably, orthogonal also to bar 6. Said second direction is also preferably parallel to the bars 11 and 12 and orthogonal to the section 10b of bar 10. Incidentally, the planes in which the structures 5 and 9 (with the exclusion of the section 10a of bar 10) preferably and respectively lie are preferably orthogonal to one another and preferably include the aforesaid first and second translation directions between the structures 5 and 9, respectively.

Incidentally, since the tubular elements of each of the joints 13 and 14 are mutually orthogonal and since the bars 7, 8, 11 and 12 are inserted in said tubular elements, respectively, the bars 7 and 8 are preferably orthogonal to the bars 11 and 12. Moreover, bar 6 is preferably parallel to the section 10b of bar 10.

Frame 3 preferably comprises a locking pin for each tubular element of the joints 13 and 14. More precisely, each of the bars 7, 8, 11 and 12 preferably comprises a plurality of longitudinally aligned through holes. Each of the tubular elements of the joints 13 and 14 preferably comprises a through hole. The through hole of each tubular element of the joints 13 and 14 is opposed to one of the through holes of bar 7, 8, 11 or 12 partially accommodated in said tubular element. Each of the aforesaid locking pins crosses the through hole of the tubular element with which it is associated and the through hole opposed to said hole of said tubular element. The crossing by each locking pin of the through hole of the tubular element with which it is associated and of the through hole opposed to said hole of said tubular element (which through hole is crossed by said locking pin) prevents a translation between said tubular element (which through hole is crossed by said locking pin) and bar 7, 8, 11 or 12 partially accommodated in said tubular element. Each locking pin thus connects integrally the tubular element with which the pin is associated (i.e., crossed by said locking pin) to bar 7, 8, 11 or 12 partially accommodated in said tubular element. The four locking pins thus integrally connect the bars 7 and 8 to the bars 11 and 12, respectively, and therefore structure 5 to structure 9, by means of the joints 13 and 14, thus preventing a relative translation between the same in the aforesaid first and second directions. More precisely, the locking pins penetrating the bars 7 and 8 (and belonging to the aforementioned "second fastening means" applied to the structures 5 and 9) prevent a translation of structure 9 with respect to structure 5 in the first direction. The locking pins penetrating the bars 11 and 12 (and belonging to the aforementioned "third fastening means" applied to the structures 5 and 9) prevent a translation of structure 9 with respect to structure 5 in the second direction.

The locking pins are removable from the holes where they are accommodated. A removal of a locking pin from the hole of bar 7, 8, 11 or 12 and from the hole of joint 13 or 14 where it is inserted allows said bar 7, 8, 11 or 12 (in a hole of which said locking pin was inserted) to slide with respect to said joint 13 or 14 (in a hole of which said locking pin was inserted). Therefore, the locking pins are removable from the holes where they are accommodated so as to allow a translation of the bars 11 and 12 with respect to the bars 7 and 8, and therefore a translation of structure 9 with respect to structure 5 in the two aforesaid directions.

In addition to being removable from the holes where they are accommodated, the locking pins can be reinserted therein. More precisely, a locking pin removed from the hole of bar 7, 8, 11 or 12 and from the hole of joint 13 or 14 where said pin was inserted can be reinserted in the same hole of joint 13 or 14 where said pin was previously inserted and in any one of the other holes of bar 7, 8, 11 or 12 in a hole of which said pin was previously inserted (i.e., after sliding said bar 7, 8, 11 or 12 in said joint 13 or 14) so as to prevent again said bar 7, 8, 11 or 12 from sliding in said joint 13 or 14 (i.e., so as to integrally reconnect said bar 7, 8, 11 or 12 to said joint 13 or 14). Once the locking pins have been removed from the holes where they are accommodated and once the structure 9 has been translated with respect to structure 5, the four locking pins thus allow the bars 7 and 8 to be reconnected integrally to the bars 11 and 12, respectively, and therefore structure 5 to structure 9, by means of the joints 13 and 14, thus preventing again a relative translation therebetween in the aforesaid first and second directions.

Incidentally, a removal of the locking pins from the holes where they are accommodated so as to allow a translation of the bars 11 and 12 with respect to the bars 7 and 8 corresponds to a removal of the aforementioned second and third fastening means from the structures 5 and 9 so as to allow a translation of structure 9 with respect to structure 5 in the two aforesaid directions, and thus an adjustment of the position of structure 9 with respect to structure 5.

Again incidentally, a reinsertion of the locking pins in the holes of the bars 7, 8, 11 and 12 and of the joints 13 and 14 so as to prevent again a translation of the bars 11 and 12 with respect to the bars 7 and 8 corresponds to a re-application of the aforementioned second and third fastening means to the structures 5 and 9 so as to prevent again a translation of structure 9 with respect to structure 5 in the two aforesaid directions, thus reconnecting them integrally to each other. Incidentally, since the tubular elements of each of the joints 13 and 14 are mutually orthogonal and since the bars 7, 8, 11 and 12 are inserted in said tubular elements, respectively, the bars 7 and 8 preferably remain orthogonal to the bars 11 and 12 and bar 6 preferably remains parallel to the section 10b of bar 10 upon a translation of structure 9 with respect to structure 5 in the first or second direction.

Additionally or alternatively to comprising the joints 13 and 14, frame 3 could comprise at least one pair of actuators (defined above as "second actuator" and "third actuator") connected to the structures 5 and 9 so that an actuation of one of the two aforesaid actuators results in a translation of structure 9 with respect to structure 5 in the aforementioned first direction, and an actuation of the other actuator results in a translation of structure 9 with respect to structure 5 in the aforementioned second direction. When they are not actuated, the two actuators prevent a translation between structure 5 and 9 in the first and second directions, respectively. When neither of the actuators is actuated, the actuators connect integrally structure 9 to structure 5.

As mentioned above, in addition to frame 3, device 1 comprises multiple plates 4, by way of example two in number. The plates 4 are preferably connected to structure 9, and more precisely, preferably to the section 10b of bar 10 of the latter. Therefore, it is preferable for the plates 4 to be connected to frame 3 at structure 9, and more precisely, preferably at the section 10b of bar 10 of the latter.

The plates 4 are connected to bar 10 so that each plate 4 can rotate about a rotation axis thereof (defined above as "second rotation axis"). The plates 4 are preferably rectangular and equal to one another. Each of the plates 4 is hinged to bar 10 preferably at a vertex 15 (top right in Figure 1) and preferably so that the rotation axis of said plate 4 coincides with an edge 16 of the latter having vertex 15 as an end. The edge 16 of each of the plates 4, and therefore the rotation axis of the latter, is preferably orthogonal to the section 10b of bar 10 and more preferably, in addition to being orthogonal to the section 10b of bar 10, is parallel to the bars 7 and 8. The edges 16 of the plates 4, and preferably the rotation axes thereof, are thus preferably mutually parallel. The edges 16 are also coplanar, in addition to one another, preferably to the section 10b of bar 10.

Since edge 16 of each of the plates 4, and therefore the rotation axis of the latter, is preferably parallel to the bars 7 and 8, since the aforementioned second translation direction of structure 9 with respect to structure 5 is parallel to the bars 11 and 12, and finally since the bars 7 and 8 are preferably orthogonal to the bars 11 and 12, the edge 16 of each of the plates 4, and therefore the rotation axis of the latter, is preferably orthogonal to the aforesaid second translation direction (and preferably parallel to the aforesaid first translation direction).

The plates 4 lie on the same side as bar 10, and more precisely, they lie on the side opposite to the side where bar 6 lies with respect to the plane in which the bars 11 and 12 and the section 10b of bar 10 preferably and substantially lie. The plates 4 extend downwards in Figure 1 starting from bar 10.

Each of the plates 4 is preferably rotatable, about the axis thereof, between a first position at which said plate 4 is preferably almost parallel to the section 10b of bar 10, and a second position at which said plate 4 is preferably almost orthogonal to the section 10b of bar 10 lying on the side opposite to that where structure 5 lies with respect to structure 9. In other words, each of the plates 4 is rotatable, from the first position, so that the edge of said plate 4 opposite to edge 16 moves away from structure 5. When both plates 4 are in the first position, the plates 4 are preferably almost coplanar. When both plates 4 are in the second position, the plates 4 are preferably almost parallel. When the plates 4 are in the first position, said plates 4 preferably abut against the section 10b of bar 10 or against respective stops with which said bar 10 is conveniently provided. Even when the plates 4 are in the second position, said plates 4 preferably abut against respective stops with which frame 3 is conveniently provided. Alternatively to said stops, frame 3 could comprise equivalent stopping means which result in the minimum and maximum inclination which each plate 4 can reach by rotating about the axis thereof with respect to the plane where the bars 11 and 12 and the section 10b of bar 10 substantially lie. Said stops, or said stopping means equivalent thereto, can be such as to allow an adjustment of the position of each plate 4 when in the first and second position (i.e., they can be such as to allow an adjustment of the aforesaid minimum and maximum inclination that each plate 4 can reach by rotating about the axis thereof with respect to the plane where the bars 11 and 12 and the section 10b of bar 10 substantially lie). Incidentally, when they are all in the first position, the plates 4 are preferably almost coplanar to the bars 11 and 12 and to the section 10b of bar 10 if the minimum inclination that each plate 4 can reach by rotating about the axis thereof with respect to said plane where the bars 11 and 12 and the section 10b of bar 10 substantially lie is equal to zero degrees or to a very small angle (such as, for example, if the plates 4 partially overlap when in the first position, as mentioned below).

In Figure 1, the plates 4 are in an intermediate position between the aforesaid first and second positions.

**Figure 2** shows an apparatus 20 of the invention as well, comprising the device 1 connected to a shoot tipping machine 2. The latter is a known agricultural machine comprising a casing 21 at least partially delimiting a seat. Casing 21 is provided with an opening 22 for accessing the aforesaid seat. When employed during a shoot tipping operation (and therefore, connected to an agricultural tractor), the shoot tipping machine 2 is opposable to the stem of a plant (involved in arboriculture and in order to remove side shoots of said plant) at opening 22. The shoot tipping machine 2 includes a shaft 23 accommodated in the aforesaid seat and rotatable about an axis preferably coincident with the longitudinal axis of shaft 23 and previously defined as "first rotation axis". The shoot tipping machine 2 also comprises a plurality of flails 24, each of which connected to shaft 23 at a first end thereof. Upon a rotation of shaft 23 about the axis thereof, each of the flails 24, by rotating with shaft 23, during a time interval of the rotation period thereof, protrudes from opening 22 at at least one end section thereof including a second end of said flail 24 opposite to the aforesaid first end thereof.

For convenience, device 1 is shown in Figure 2 without the joints 13 and 14 and with the bars 10 and 11 "interrupted" to better show shaft 23 and the flails 24 of the shoot tipping machine 2.

Shoot tipping machines are substantially known. Therefore, no further details will be provided.

Device 1 is connected to the shoot tipping machine 2 at frame 3, more precisely preferably at structure 5, and even more precisely, both at the bars 7 and 8 and at bar 6. Structure 5 is connected to the shoot tipping machine 2, preferably at casing 21 and preferably so that, with reference to the position of the shoot tipping machine 2 with respect to the ground during the execution of a shoot tipping operation carried out with said shoot tipping machine 2, the bars 7 and 8 lie on opposite sides with respect to opening 22, laterally to the latter, and bar 6 substantially overlaps opening 22. Each of the bars 7 and 8, preferably at the end thereof opposite to bar 6, is connected to the shoot tipping machine 2 so that structure 5 can rotate, with respect to the shoot tipping machine 2, about an axis defined above as "third rotation axis". The latter is not orthogonal to the rotation axis of shaft 23 and is preferably parallel to said rotation axis (of shaft 23). The rotation axis of structure 5, with respect to the shoot tipping machine 2, is preferably parallel to bar 6 and therefore, preferably orthogonal to the bars 7 and 8. Preferably, the bars 6, 7, and 8 and the rotation axis of structure 5, with respect to the shoot tipping machine 2, are substantially coplanar. In light of the foregoing, each of the aforementioned first and second translation directions of structure 9, with respect to structure 5, is preferably not parallel to the rotation axis of structure 5, with respect to the shoot tipping machine 2, and more preferably is orthogonal to the latter (i.e., to the rotation axis of structure 5 with respect to the shoot tipping machine 2). Additionally, since the rotation axis of each of the plates 4 is preferably orthogonal to the section 10b of bar 10 and parallel to the bars 7 and 8, the rotation axis of each of the plates 4 is preferably not parallel to the rotation axis of structure 5, with respect to the shoot tipping machine 2, and more preferably is orthogonal to the latter (i.e., to the rotation axis of structure 5 with respect to the shoot tipping machine 2).

Device 1 preferably comprises a linear actuator 25, defined above as "first actuator", connected at a first end to the shoot tipping machine 2, preferably at casing 21, and at the other end to structure 5, preferably at bar 6. The connection of actuator 25 to the shoot tipping machine 2 and to bar 6 is such that an actuation of actuator 25 (when the bars 7 and 8 are connected to the shoot tipping machine 2) results in a rotation of structure 5 with respect to the shoot tipping machine 2 about the aforementioned third axis. When it is not actuated (and the bars 7 and 8 are connected to the shoot tipping machine 2), actuator 25 prevents a rotation between structure 5 and the shoot tipping machine 2. When actuator 25 is not actuated (and the bars 7 and 8 are connected to the shoot tipping machine 2), actuator 25 integrally connects structure 5 to the shoot tipping machine 2.

Actuator 25 belongs to the aforementioned "first fastening means", i.e., means suitable for preventing a rotation between structure 5 and the shoot tipping machine 2. The connection of actuator 25 to the shoot tipping machine 2 (when the bars 7 and 8 are connected to the shoot tipping machine 2) while actuator 25 is not actuated corresponds to an application of the aforesaid first fastening means to structure 5 and to the shoot tipping machine 2 so as to prevent a rotation therebetween. An actuation of actuator 25 (when the bars 7 and 8 are connected to the shoot tipping machine 2) corresponds to a removal of the first fastening means from structure 5 and from the shoot tipping machine 2 so as to allow a rotation therebetween. A stop of actuator 25 (i.e., a return to a "non-actuation" thereof) (when the bars 7 and 8 are connected to the shoot tipping machine 2) corresponds to a re-application of the first fastening means to structure 5 and to the shoot tipping machine 2 so as to prevent again a rotation therebetween.

Unlike the aforementioned locking pins (acting as second and third fastening means), actuator 25 is connectable to a shoot tipping machine when or after connecting device 1 (and more precisely, the bars 7 and 8) to the shoot tipping machine 2. In other words, while the second and third fastening means are already applied to the structures 5 and 9 in device 1, the first fastening means are applicable to structure 5 and to the shoot tipping machine 2 so as to prevent a relative rotation therebetween when or after connecting device 1 to the shoot tipping machine 2 (and therefore, also the bars 7 and 8 to the shoot tipping machine 2). The removal of the first fastening means takes place by actuating actuator 25.

Incidentally and equivalently to the above description, actuator 25 could be a component of the shoot tipping machine 2 connected to the latter at an end thereof, and be connectable to bar 6 at the other end. In this case, it is an element by means of which the connection takes place of actuator 25 to structure 5 (for example, a plate or a bolt) to act as fastening means of the latter to the shoot tipping machine 2 (i.e., adapted to prevent a relative rotation between structure 5 and the shoot tipping machine 2 when the bars 7 and 8 are connected to the shoot tipping machine 2). The application of the first fastening means takes place by connecting actuator 25 (while it is not actuated) to structure 5 (rather than to the shoot tipping machine 2). The removal of the first fastening means takes place by disconnecting actuator 25 from structure 5 (rather than by actuating actuator 25). The re-application of the first fastening means (after possibly actuating actuator 25) takes place by reconnecting actuator 25 (while it is not actuated) to structure 5.

Again incidentally, the first fastening means could comprise, additionally or alternatively to actuator 25, a pair of suitable locking pins, equal to the four locking pins of the bars 7, 8, 11 and 12, for reversibly immobilizing the bars 7 and 8, respectively, to the shoot tipping machine 2.

Actuator 25 allows adjusting the inclination of structure 5 with respect to the shoot tipping machine 2.

Since structure 9 is connected to structure 5 with the concavity of the "U" as the structure 9 is substantially shaped, facing structure 5, bar 10 lies on the side opposite to that where the shoot tipping machine 2 lies with respect to structure 5. Moreover, since bar 6 overlaps opening 22, each plate 4 is at least partially opposed to opening 22. Additionally, when said shoot tipping machine 2 is opposed to the stem of a plant at opening 22, at least one of the plates 4 is at least partially interposed between opening 22 and the stem of said plant.

As better disclosed with reference to the following drawings, when one of the plates 4 is in the first position (i.e., it is preferably almost parallel to the section 10b of bar 10), said plate 4 at least partially obstructs opening 22 so that at least one group of flails 24, upon a rotation of shaft 23 about the axis thereof, rather than protruding from opening 22, impacts against said plate 4 at the respective aforesaid end sections of the flails 24 of said group and during the respective aforesaid time intervals of the rotation periods of the flails 24 of said group. Incidentally, the flails of the aforesaid group are those connected to the section of shaft 23 opposed to said plate 4 when the latter is in the first position.

When said plate 4 is in the second position (i.e., it is preferably almost orthogonal to the section 10b of bar 10), said plate 4 does not obstruct, or only partially obstructs, opening 22 so that some or all the flails 24 of the aforesaid group, upon a rotation of shaft 23 about the axis thereof, protrude from opening 22 at the respective aforesaid end sections and during the respective aforesaid time intervals of the rotation periods thereof. When said plate 4 is in the first position, the impact of the flails 24 of the aforesaid group against said plate 4 tends to rotate (i.e., push) said plate 4 to the second position.

When all the plates 4 are in the first position, said plates 4, as a whole, at least partially obstruct opening 22 so that all the flails 24, upon a rotation of shaft 23 about the axis thereof, rather than protruding from opening 22, impact against the plates 4 at the respective aforesaid end sections and during the respective aforesaid time intervals of the rotation periods thereof (i.e., no flail 24 protrudes from opening 22).

As disclosed with reference to the following drawings, when one of the plates 4 is in the second position and the shoot tipping machine 2, together with device 1 connected thereto, is employed in a shoot tipping operation, upon a movement of the shoot tipping machine 2 parallel to the ground, an impact of said plate 4 against the stem of a plant tends to rotate (i.e., push) said plate 4 to the first position, thus protecting the stem of the plant from the flails 24.

Each of the plates 4 is connected to frame 3 so that during a shoot tipping operation carried out with apparatus 20, each of the plates 4 does not come into contact with the ground. Conversely with respect to the stems of the plants involved in arboriculture, when the weeds, small spontaneous shrubs and side shoots impact against one of the plates 4 upon a translation of apparatus 20 during a shoot tipping operation, they indeed are not able to overcome the push of the flails 24 against said plate 4 and therefore, they are not able to rotate the latter to the first position. Therefore, when the side shoots bend and, at an advancement of apparatus 20, they pass under said plate 4, thereby being hit by the flails 24.

In light of the foregoing, when the shoot tipping machine 2, together with device 1 connected thereto, is employed in a shoot tipping operation, adjusting the inclination of structure 5 with respect to the shoot tipping machine 2 makes it possible to adjust the inclination of the rotation axis of each plate 4 with respect to the ground. By translating structure 9 with respect to structure 5, the distance of each plate 4 from the ground and from opening 22 can also be adjusted.

To avoid any misunderstanding, the translations of structure 9 with respect to structure 5 take place in directions such that and can be of an entity such that, and the rotation of structure 5 with respect to the shoot tipping machine 2 takes place about an axis such that and can be of an entity such that:
- each plate 4 is always at least partially opposed to opening 22;
- when the shoot tipping machine 2 is employed in a shoot tipping operation, no plate 4 is in contact with the ground;
- when the shoot tipping machine 2 is opposed to the stem of a plant at opening 22, at least one of the plates 4 is at least partially interposed between opening 22 and the stem of said plant;
- when one of the plates 4 is in the first position, said plate 4 at least partially obstructs opening 22 so that at least one group of flails 24, upon a rotation of shaft 23 about the axis thereof, rather than protruding from opening 22, impacts against said plate 4 at the respective aforesaid end sections of the flails 24 of said group and during the respective aforesaid time intervals of the rotation periods of the flails 24 of said group;
- when said plate 4 is in the second position, said plate 4 does not obstruct, or only partially obstructs, opening 22 so that some or all the flails 24 of the aforesaid group, upon a rotation of shaft 23 about the axis thereof, protrude from opening 22 at the respective aforesaid end sections and during the respective aforesaid time intervals of the rotation periods thereof;
- when all the plates 4 are in the first position, said plates 4, as a whole, at least partially obstruct opening 22 so that all the flails 24, upon a rotation of shaft 23 about the axis thereof, rather than protruding from opening 22, impact against the plates 4 at the respective aforesaid end sections and during the respective aforesaid time intervals of the rotation periods thereof (i.e., no flail 24 protrudes from opening 22).

As shown in Figures 1 and 2, frame 3 preferably comprises a spacer 26 connected to bar 10 at a portion of section 10b thereof interposed between the section 10a of bar 10 (protruding past bar 12) and the plate 4 closest to said section 10a. Spacer 26 is preferably almost coplanar to the plates 4 when in the first position and lies on the same side where the plates 4 lie with respect to the section 10b of bar 10. Therefore, spacer 26 is preferably placed beside one of the two plates 4. Spacer 26 extends away from bar 10 in such a measure as to protrude past the plates 4 when in the first position, so as to prevent each plate 4 from coming into contact with the ground when device 1 is connected to the shoot tipping machine 2 and the latter is employed in a shoot tipping operation or upon a translation of structure 9 with respect to structure 5 or upon a rotation of structure 5 with respect to the shoot tipping machine 2. When the plates 4 are in the first position, spacer 26, coming into contact with the ground, keeps the plates 4 raised off the latter.

Device 1 could comprise a single plate 4. In this case, when the shoot tipping machine 2, together with device 1 connected thereto, is opposed to the stem of a plant at opening 22, said (only) plate 4 is at least partially interposed between opening 22 and the stem of said plant. When said (only) plate 4 is in the first position, said (only) plate at least partially obstructs opening 22 so that at least all the flails 24, upon a rotation of shaft 23 about the axis thereof, rather than protruding from opening 22, impact against said plate 4 at the respective aforesaid end sections and during the respective aforesaid time intervals of the rotation periods thereof. Moreover, when said (only) plate 4 is in the second position, said (only) plate 4 does not obstruct, or only partially obstructs, opening 22 so that at least some flails 24, upon a rotation of shaft 23 about the axis thereof, protrude from opening 22 at the respective aforesaid end sections and during the respective aforesaid time intervals of the rotation periods thereof.

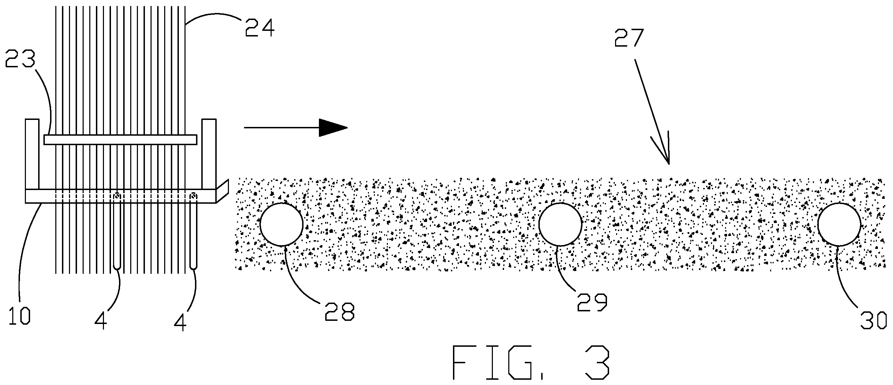

**Figure 3** diagrammatically shows, from the top, the apparatus 20 (i.e., the device 1 connected to the shoot tipping machine 2 at the bars 7 and 8 and at the actuator 25) ready to be employed to carry out a shoot tipping operation on a row 27 including a plurality of plants, the stem of each of them being visible in Figure 3 and in the following drawings. The plants of row 27 are, by way of example, three in number and the respective stems, also diagrammatically shown from the top, are identified, from left to right as shown in Figure 3, by reference numerals 28, 29 and 30.

Apparatus 20 is conveniently connected to an agricultural tractor (not shown in the drawings) suitable for translating apparatus 20 parallel to row 27 close to the ground and suitable for providing apparatus 20 with the power required to rotate shaft 23 together with the flails 24 of the shoot tipping machine 2. In Figure 3, apparatus 20 is placed to the left of stem 28 (furthest left in Figure 3) so that there is no stem of the plants of row 27 in front of opening 22. Apparatus 20 is oriented so that upon a translation of apparatus 20 by the aforesaid tractor to the right in Figure 3, parallel to row 27 and close to the ground, apparatus 20 passes in front of the stems 28, 29 and 30 with opening 22 and the structures 5 and 9 opposed thereto (i.e., to said stems 28, 29 and 30). The rotation axes of the plates 4 have preferably been arranged orthogonal to the ground by conveniently actuating actuator 25 (shown in Figure 3 not actuated). The plates 4 have also been arranged at a desired distance from the ground and from opening 22 by removing the locking pins from the holes where they were accommodated, conveniently translating, when required, structure 9 with respect to structure 5, and reinserting the locking pins in the holes of the joints 13 and 14 and of the bars 7, 8, 11 and 12. Shaft 23 is under rotation about the axis thereof. Due to this, since there is no stem in front of opening 22, the flails 24 protrude from opening 22 (at the aforesaid end sections and during the aforesaid time intervals of the respective rotation periods), pushing (or keeping) the plates 4 to/in the second position.

Assuming for the sake of simplicity that the stems 28, 29 and 30 lie on a plane arranged vertically (i.e., arranged orthogonal to the plane of the leaf), apparatus 20 is arranged so that the plane in which the stems 28, 29 and 30 lie intersects the plates 4 when (as in this drawing) in the second position. Therefore, the plates 4, if in the second position, impact against the stems 28, 29 and 30 starting from stem 28 upon a translation of apparatus 20 parallel to row 27 (and therefore parallel to the aforesaid plane in which the stems 28, 29 and 30 lie). More precisely, apparatus 20 is preferably arranged so that the plane on which the stems 28, 29 and 30 lie is substantially tangent to the plane in which the plates 4 almost lie when in the first position. In case apparatus 20 skids during the aforesaid translation, if the skid results in a crossing by structure 9 of the plane in which the stems 28, 29 and 30 lie, section 10a of bar 10, knocking against one of the stems 28, 29 or 30 during the translation of apparatus 20, tends to push the latter away from the aforesaid plane, bringing it back to the correct position.

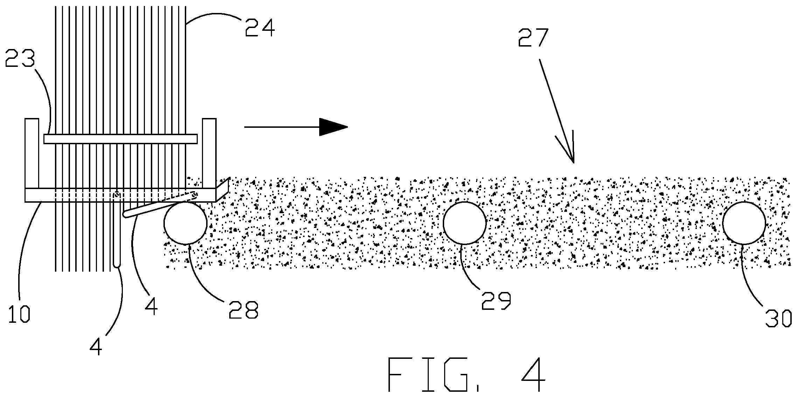

**Figure 4** shows the apparatus 20 in Figure 3 following a translation thereof, by the aforesaid tractor, to the right (with reference to Figures 3 and 4). The entity of the aforesaid translation was such that plate 4 placed on the right (again with reference to Figures 3 and 4) impacted against stem 28. More precisely, the entity of the aforesaid translation was such that the rotation axis of the aforesaid plate 4 placed on the right passed beyond stem 28 and said plate 4 is now in contact with the latter at a portion thereof interposed between edge 16 and the edge thereof opposite thereto. Therefore, plate 4 placed on the right is opposed to stem 28 and was rotated by the latter (upon the translation of apparatus 20 with respect to row 27) to an intermediate position between the first position and the second position. The rotation of plate 4 placed on the right while shaft 22 is under rotation was possible because the flails 24 are very flexible and the stems 28, 29 and 30 are sufficiently rigid to overcome, rather than be bent by, the push of the flails 24 on the plates 4. By rotating, plate 4 placed on the right allowed the translation of apparatus 20 parallel to row 27, but at the same time prevented the flails 24 from coming into contact with stem 28.

Incidentally, plate 4 placed on the left (again with reference to Figures 3 and 4) is still in the second position.

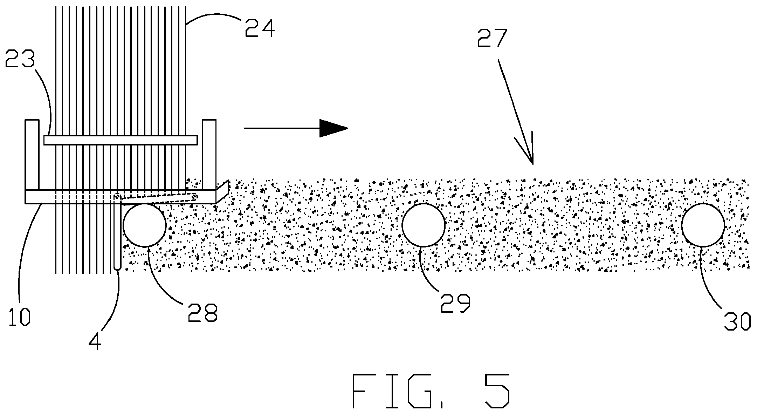

**Figure 5** shows the apparatus 20 in Figure 4 following a further translation thereof, by the aforesaid tractor, to the right. The entity of the aforesaid further translation was such that plate 4 placed on the right is now in contact with stem 28 close to the edge thereof opposite to edge 16. Therefore, plate 4 placed on the right is still opposed to stem 28 and was further rotated by the latter (upon the translation of apparatus 20 with respect to row 27) almost to the first position. By rotating, plate 4 placed on the right allowed the further translation of apparatus 1 parallel to row 27, but continued to prevent the flails 24 from coming into contact with stem 28. Plate 4 placed on the left is still in the second position.

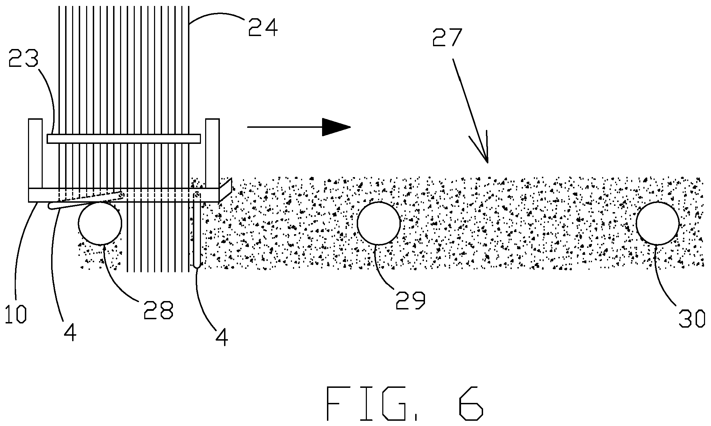

**Figure 6** shows the apparatus 20 in Figure 5 following a further translation thereof, by the aforesaid tractor, to the right. The entity of the aforesaid further translation was such that plate 4 placed on the right is no longer opposed to stem 28 (nor to stem 29 or 30) and plate 4 placed on the left impacted against said stem 28. More precisely, the entity of the aforesaid translation was such that the rotation axis of plate 4 placed on the left passed beyond stem 28 and said plate 4 is now in contact with the latter at a portion thereof interposed between edge 16 and the edge thereof opposite thereto. Therefore, plate 4 placed on the left is opposed to stem 28 and was rotated by the latter (upon the translation of apparatus 20 with respect to row 27) to an intermediate position between the first position and the second position. Similarly to plate 4 placed on the right, the rotation of plate 4 placed on the left while shaft 22 is under rotation was possible because the flails 24 are very flexible and the stems 28, 29 and 30 are sufficiently rigid to overcome, rather than be bent by, the push of the flails 24 on the plates 4. By rotating, plate 4 placed on the left allowed the translation of apparatus 20 parallel to row 27, but at the same time prevented the flails 24 from coming into contact with stem 28.

Since plate 4 placed on the right is no longer opposed to stem 28, it was pushed by the flails 24 to the second position.

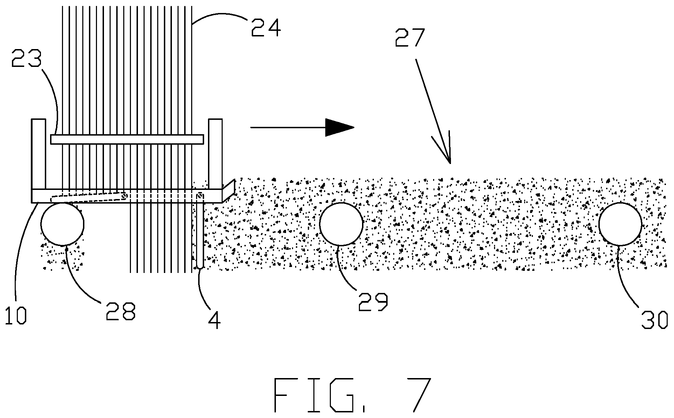

**Figure 7** shows the apparatus 20 in Figure 6 following a further translation thereof, by the aforesaid tractor, to the right. The entity of the aforesaid further translation was such that plate 4 placed on the left is now in contact with stem 28 close to the edge thereof opposite to edge 16. Therefore, plate 4 placed on the left is still opposed to stem 28 and was further rotated by the latter (upon the translation of apparatus 20 with respect to row 27) almost to the first position. By rotating, plate 4 placed on the left allowed the further translation of apparatus 1 parallel to row 27, but continued to prevent the flails 24 from coming into contact with stem 28. Plate 4 placed on the right is not opposed to stem 29 or 30 and is still in the second position.

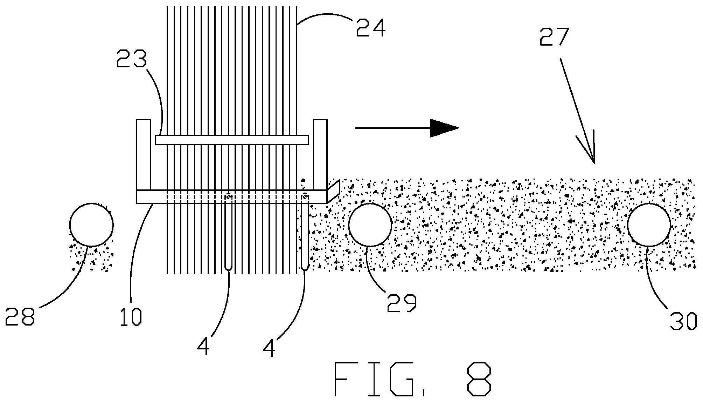

**Figure 8** shows the apparatus 20 in Figure 7 following a further translation thereof, by the aforesaid tractor, to the right. The entity of the aforesaid further translation was such that plate 4 placed on the left is no longer opposed to stem 28 (nor to stem 29 or 30) and was pushed by the flails 24 to the second position. Plate 4 placed on the right is not opposed to stem 29 or 30 and is still in the second position. Therefore, apparatus 20 is in an intermediate position between the stems 28 and 29.

As shown in this drawing, the flails 24, passing in front of stem 28, have removed the side shoots at the almost totality of the ground surrounding said stem 28.

The continuation of the translation of apparatus 20 parallel to row 27 causes the shoot tipping operation to then take place towards stems 29 and 30 as described with reference to stem 28.

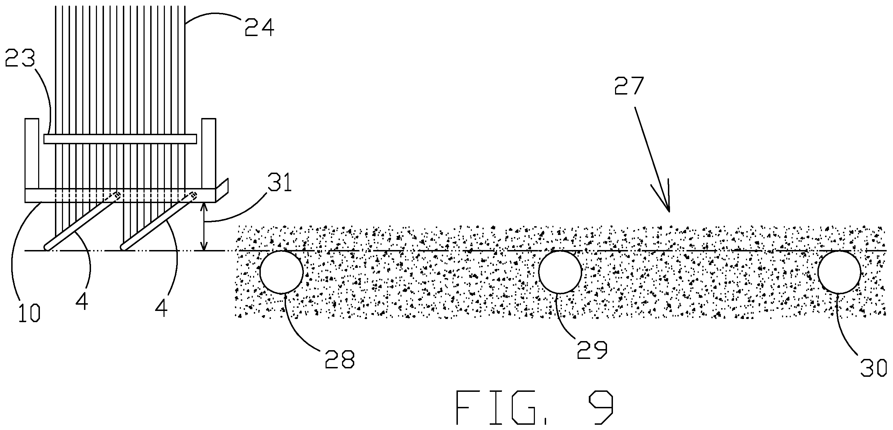

Incidentally and as shown in **Figure 9****,** if apparatus 20 is arranged so that the plane on which the stems 28, 29 and 30 lie is at a given distance from the plates 4 when in the first position (rather than almost tangent to the latter), it is suitable for the plates 4, when in the first position, to be partially overlapping (i.e., for the end portion of the right plate 4 including the edge opposite to edge 16 of said right plate 4 to overlap the end portion of the left plate 4 including edge 16 of said left plate 4) so that, not only when all the plates 4 are in the first position, but also when all the plates 4 are in an intermediate position between the first and second position (and more precisely, in a position falling in a "range" of intermediate positions originating from the first position), said plates 4, as a whole, at least partially obstruct opening 22 so that all the flails 24, upon a rotation of shaft 23 about the axis thereof, rather than protruding from opening 22, impact against the plates 4 at the respective aforesaid end sections and during the respective aforesaid time intervals of the rotation periods thereof (i.e., no flail 24 protrudes from opening 22). In this case, the apparatus 20 is to be arranged so that said distance at which there is the plane on which the stems 28, 29 and 30 of the plates 4 lie when in the first position is such that (i.e., not greater than a given threshold 31 shown in Figure 9, so that), by passing in front of each of the stems 28, 29 and 30, the plates 4 are sufficiently inclined so as to prevent all the flails 24 from impacting against said stems 28, 29 and 30.

Based on the description provided for a preferred embodiment, it is obvious that some changes can be made by those skilled in the art without departing from the scope of the invention as defined by the following claims.

## Claims

1. A device (1) connectable to a shoot tipping machine (2),
said shoot tipping machine (2) comprising:
• a casing (21) at least partially delimiting a seat,
said casing (21) including at least one opening (22) for accessing said seat, said shoot tipping machine (2) being opposable to the stem (28, 29, 30) of a plant at said opening (22);
• a shaft (23) accommodated in said seat and rotatable about a first rotation axis;
• a plurality of flails (24), each of which connected to said shaft (23) at a first end thereof,
upon a rotation of said shaft (23) about said first axis, each of said flails (24), during a time interval of the rotation period thereof, protruding from said opening (22) at at least one end section thereof including a second end of said flail (24) opposite to said first end thereof,
said device (1) being **characterized in that** it comprises:
• a frame (3) connectable to said shoot tipping machine (2);
• one or more plates (4), each of which connected to said frame (3) so as to rotate about a second rotation axis,
each of said one or more plates (4) being also connected to said frame (3) so that when said frame (3) is connected to said shoot tipping machine (2):
- each of said one or more plates (4) is at least partially opposed to said opening (2),
- during a shoot tipping operation carried out with said shoot tipping machine (2), each of said one or more plates (4) is not in contact with the ground
and
- when said shoot tipping machine (2) is opposed to the stem (28, 29, 30) of a plant at said opening (22), at least one of said plates (4) is at least partially interposed between said opening (22) and the stem (28, 29, 30) of said plant,
each of said one or more plates (4) being rotatable, with respect to said frame (3), about said second axis, between at least:
- a first position at which, when said frame (3) is connected to said shoot tipping machine (2), said plate (4) at least partially obstructs said opening (22) so that, upon a rotation of said shaft (23) about said first axis, rather than protruding from said opening (22), at least one group of flails (24) of said plurality impacts against said plate (4) at said end sections of said flails (24) of said group, respectively, and during said time intervals of said rotation periods of said flails (24) of said group, respectively,
and
- a second position at which, when said frame (3) is connected to said shoot tipping machine (2), said plate (4) does not obstruct, or only partially obstructs, said opening (22) so that, upon a rotation of said shaft (23) about said first axis, some or all the flails (24) of said groups protrude from said opening (22) at said respective end sections and during said respective time intervals of the rotation periods thereof,
when said frame (3) is connected to said shoot tipping machine (2), an impact of the flails (24) of said group against said plate (4) when the latter is in said first position tending to rotate said plate (4) to said second position,
if said device (1) comprises only one of said plates (4):
- when said frame (3) is connected to said shoot tipping machine (2) and the latter is opposed to the stem (28, 29, 30) of a plant at said opening (22), said plate (4) being at least partially interposed between said opening (22) and said stem (28, 29, 30) of said plant,
- when said frame (3) is connected to said shoot tipping machine (2) and said plate (4) is in said first position, said plate (4) at least partially obstructing said opening (22) so that, upon a rotation of said shaft (23) about said first axis, rather than protruding from said opening (22), all the flails (24) of said plurality impact against said plate (4) at said respective end sections and during said respective time intervals of the rotation periods thereof
and
- when said frame (3) is connected to said shoot tipping machine (2) and said plate (4) is in said second position, said plate (4) not obstructing, or only partially obstructing, said opening (22) so that, upon a rotation of said shaft (23) about said first axis, at least some of the flails (24) of said plurality protrude from said opening (22) at said respective end sections and during said respective time intervals of the rotation periods thereof,
if, conversely, said device (1) comprises a plurality of said plates, when said frame (3) is connected to said shoot tipping machine (2) and each of said plates (4) is in said first position, said plates (4), as a whole, at least partially obstructing said opening (22) so that, upon a rotation of said shaft (23) about said first axis, rather than protruding from said opening (22), all the flails (24) of said plurality impact against said plates (4) at said respective end sections and during said respective time intervals of the rotation periods thereof,
each of said one or more plates (4) being connected to said frame (3) so that, when said frame (3) is connected to said shoot tipping machine (2) during a shoot tipping operation carried out with said shoot tipping machine (2) and said plate (4) is in said second position, upon a movement of said shoot tipping machine (2) parallel to the ground, an impact of said plate (4) against said stem (28, 29, 30) of a plant tends to rotate said plate (4) to said first position.

2. A device (1) according to claim 1, **characterized in that** said frame (3) comprises:
• a first load-bearing structure (5) connectable to said shoot tipping machine (2) so as to rotate with respect to the latter about a third rotation axis,
said frame (3) thus being connectable to said shoot tipping machine (2) at said first load-bearing structure (5),
when said first load-bearing structure (5) is connected to said shoot tipping machine (2), said third rotation axis not being orthogonal to said first rotation axis;
• first fastening means (25) applicable to said first load-bearing structure (5) and said shoot tipping machine (2),
when said first load-bearing structure (5) is connected to said shoot tipping machine (2), said first fastening means (25) being applied to said first load-bearing structure (5) and said shoot tipping machine (2) and being suitable for preventing a rotation between said first load-bearing structure (5) and said shoot tipping machine (5) so as to connect them integrally to each other, said first fastening means (25), when applied to said first load-bearing structure (5) and said shoot tipping machine (2), also being:
- removable from said first load-bearing structure (5) and/or said shoot tipping machine (2) so as to allow a rotation between said first load-bearing structure (5) and said shoot tipping machine (2)
and then
- re-applicable to said first load-bearing structure (5) and said shoot tipping machine (2) so as to prevent again a rotation between said first load-bearing structure (5) and said shoot tipping machine (2);
• a second load-bearing structure (9) connected to said first load-bearing structure (5) so as to translate, with respect to the latter, in both a first direction and a second direction not parallel to said first direction,
said first direction not being parallel to said third axis,
said second direction not being parallel to said third axis,
• second and third fastening means applied to said first and second load-bearing structures (5, 9) and adapted to prevent a translation between said first and second load-bearing structures (5, 9) in said first and second directions, respectively, so as to connect integrally said first and second load-bearing structures (5, 9) to each other,
said second and third fastening means, independently of each other, also being:
- removable from said first and/or second load-bearing structures (5, 9) so as to allow a translation between said first and second load-bearing structures (5, 9) along said first and second directions, respectively
and then
- re-applicable to said first and second load-bearing structures (5, 9) so as to prevent again a translation between said first and second load-bearing structures (5, 9) along said first and second directions, respectively,
each of said one or more plates (4) being connected to said frame (3) at said second load-bearing structure (9) and so that said second rotation axis of said plate (4) is not parallel to said third axis.

3. A device (1) according to claim 2, **characterized in that** said first load-bearing structure (5) is connectable to said shoot tipping machine (2) so that said third axis is parallel to said first axis,
said first and second directions being orthogonal to each other,
each of said first and second directions being orthogonal to said third axis,
for each of said one or more plates (4), said second rotation axis being orthogonal to said third axis.

4. A device (1) according to claim 3, **characterized in that**, for each of said one or more plates (4), said second rotation axis is orthogonal to said second direction.

5. A device (1) according to one of claims 2 to 4, **characterized in that** said frame (2) comprises spacer means (26) connected to said second load-bearing structure (9),
both each of said one or more plates (4), when in said first position, and said spacer means (26) extending away from said second load-bearing structure (9) substantially in the same direction,
said spacer means (26) extending away from said second load-bearing structure (9) more than each of said one or more plates (4) extends away from said load-bearing structure (9) when in said first position.

6. A device (1) according to one of claims 2 to 5, **characterized in that** said first fastening means comprise at least a first actuator (25) connectable to said first load-bearing structure (5) and said shoot tipping machine (2) so that, when said first load-bearing structure (5) is connected to said shoot tipping machine (2), an actuation of said first actuator (25) results in a rotation of said first load-bearing structure (5) with respect to said shoot tipping machine (2) about said third axis,
when said first load-bearing structure (5) is connected to said shoot tipping machine (2), said first actuator (25) being connected to said first load-bearing structure (5) and said shoot tipping machine (2),
said first actuator (25), when connected to said first load-bearing structure (5) and said shoot tipping machine (2) and not actuated, preventing a rotation between said first load-bearing structure (5) and said shoot tipping machine (2), an actuation of said first actuator (25) corresponding to a removal of said first fastening means from said first load-bearing structure (5) and/or said shoot tipping machine (2),
a stop of said first actuator (25) following an actuation thereof corresponding to a re-application of said first fastening means to said first load-bearing structure (5) and said shoot tipping machine (2).

7. A device according to one of claims 2 to 6, **characterized in that** said second fastening means comprise at least a second actuator connected to said first and second load-bearing structures (5, 9) so that an actuation of said second actuator results in a translation of said second load-bearing structure (9) with respect to said first load-bearing structure (5) in said first direction,
said second actuator, when not actuated, preventing a translation of said second load-bearing structure (9) with respect to said first load-bearing structure (5) in said first direction,
an actuation of said second actuator corresponding to a removal of said second fastening means from said first and/or second load-bearing structures (5, 9),
a stop of said second actuator following an actuation thereof corresponding to a re-application of said second fastening means to said first and second load-bearing structures (5, 9).

8. A device according to one of claims 2 to 7, **characterized in that** said third fastening means comprise at least a third actuator connected to said first and second load-bearing structures (5, 9) so that an actuation of said third actuator results in a translation of said second load-bearing structure (9) with respect to said first load-bearing structure (5) in said second direction,
said third actuator, when not actuated, preventing a translation of said second load-bearing structure (9), with respect to said first load-bearing structure (5) in said second direction,
an actuation of said third actuator corresponding to a removal of said third fastening means from said first and/or second load-bearing structures (5, 9),
a stop of said third actuator following an actuation thereof corresponding to a re-application of said third fastening means to said first and second load-bearing structures (5, 9).

9. A device (1) according to one of the preceding claims, **characterized in that**, if said device (1) comprises a plurality of said plates (4), said second axes are coplanar and mutually parallel.

10. An apparatus (20) comprising:
• a shoot tipping machine (2) including:
- a casing (21) at least partially delimiting a seat,
said casing (21) including at least one opening (22) for accessing said seat,
said shoot tipping machine (2) being opposable to the stem (28, 29, 30) of a plant at said opening (22);
- a shaft (23) accommodated in said seat and rotatable about a first rotation axis;
- a plurality of flails (24), each of which connected to said shaft (23) at a first end thereof,
upon a rotation of said shaft (23) about said first axis, each of said flails (24), during a time interval of the rotation period thereof, protruding from said opening (22) at at least one end section thereof including a second end of said flail (24) opposite to said first end thereof;
• a device (1) according to one of the preceding claims, with said frame (3) connected to said shoot tipping machine (2).

## Patentansprüche

1. Zubehör (1), das an eine Kipperschüttmaschine (2) angeschlossen werden kann,
wobei die Kipperschüttmaschine (2) umfasst:
∘ ein Gehäuse (21), das einen Sitz zumindest teilweise begrenzt,
wobei das Gehäuse (21) mindestens eine Öffnung (22) für den Zugang zu diesem Sitz einschließt,
wobei die Kipperschüttmaschine (2) dem Stamm (28, 29, 30) einer Pflanze bei der Öffnung (22) gegenüberliegt ;
∘ einen in dem Sitz untergebrachten und um eine erste Rotationsachse drehbaren Schaft (23);
∘ eine Mehrzahl? von Flagellen (24), von denen jede an ihrem ersten Ende mit dem Schaft (23) verbunden ist, wobei bei einer Drehung des Schaftes (23) um die erste Achse ragt jede der Flagellen (24) während eines Zeitintervalls ihrer eigenen Rotationsperiode aus der Öffnung (22) bei mindestens einer ihrer Endabschnitte heraus, einschließlich eines zweiten Endes des Flagellums (24) gegenüber dem ersten Ende desselben,
wobei das Zubehör (1) ist **dadurch gekennzeichnet, dass** es Folgendes umfasst:
∘ einen Rahmen (3), der mit der Kipperschüttmaschine (2) verbunden werden kann ;
∘ eins oder mehrere Platten (4), von denen jede mit dem Rahmen (3) so verbunden ist, dass sie um eine zweite Rotationsachse drehen kann,
wobei jede der einen oder mehreren Platten (4) mit dem Rahmen (3) auch derart verbunden ist, dass wenn der Rahmen (3) mit der Kipperschüttmaschine (2) verbunden ist
- liegt jeweils eine oder mehrere der Platten (4) zumindest teilweise gegenüber der Öffnung (2),
- während eines Kipperschüttvorgangs, der mit der Kipperschüttmaschine (2) durchgeführt wird, hat jeder der einen oder mehreren Platten (4) keinen Kontakt zum Boden
Und
- wenn die Kipperschüttmaschine (2) gegenüber dem Stamm (28, 29, 30) einer Pflanze bei der Öffnung (22) liegt, ist mindestens eine der Platten (4) zumindest teilweise zwischen der Öffnung (22) und dem Stamm (28, 29, 30) der Pflanze angeordnet,
wobei jeweils eine oder mehrere der Platten (4) bezüglich des Rahmens (3) um die zweite Achse drehen können,
- zwischen mindestens einer ersten Position bei der, wenn der Rahmen (3) mit der Kipperschüttmaschine (2) verbunden ist, verschließt die Platte (4) die Öffnung (22) zumindest teilweise, sodass bei einer Drehung des Schaftes (23) um die erste Achse, anstatt aus der dieser Öffnung (22) herauszuragen, stößt mindestens eine Gruppe von Flagellen (24) dieser Mehrzahl gegen die Platte (4) resp. an den jeweiligen Endpunkten der Flagellen (24) der Gruppe, sowie resp. während der Zeitintervalle der Rotationsperioden der Flagellen (24) der Gruppe,
und
- einer zweiten Position, an der, wenn der Rahmen (3) mit der Kipperschüttmaschine (2) verbunden ist, verschließt die Platte (4) die Öffnung (22) nicht oder nur teilweise, sodass einige oder alle Flagellen (24) dieser Gruppe bei einer Drehung des Schaftes (23) um die erste Achse an den jeweiligen Endpunkten und während der jeweiligen Zeitintervalle ihrer Rotationsperioden aus der Öffnung (22) herausragen, wenn der Rahmen (3) mit der Kipperschüttmaschine (2) verbunden ist, neigt ein Aufprall der Flagellen (24) der Gruppe gegen die Platte (4), wenn diese sich in der ersten Position befindet, dazu, die Platte (4) in der zweiten Position zu drehen,
wenn das Zubehör (1) nur eine der Platten (4) umfasst :
- wann der Rahmen (3) mit der Kipperschüttmaschine (2) verbunden ist und die letztere gegenüber dem Stamm (28, 29, 30) einer Pflanze bei der Öffnung (22) angeordnet ist, ist die Platte (4) zumindest teilweise zwischen der Öffnung (22) und dem Stamm (28, 29, 30) der Pflanze angeordnet,
- wenn der Rahmen (3) mit der Kipperschüttmaschine (2) und der Platte (4) verbunden ist, verschließt in der ersten Position die Platte (4) die Öffnung (22) zumindest teilweise, sodass alle Flagellen (24) der Mehrzahl, bei einer Drehung des Schaftes (23) um die erste Achse, anstatt der Öffnung (22) herauszuragen, stoßen alle Flagellen (24) dieser Mehrzahl an den jeweiligen Endpunkten gegen die Platte (4) und während dieser jeweiligen Zeitintervalle ihrer Rotationsperioden,
und
- wenn der Rahmen (3)? mit der Kipperschüttmaschine (2) und mit der Platte (4) in der zweiten Position verbunden ist, verschließt die Platte (4) die Öffnung (22) nicht oder nur teilweise, sodass mindestens einige Flagellen (24) der Mehrzahl bei einer Drehung des Schaftes (23) um die erste Achse an den jeweiligen Endpunkten und während der jeweiligen Zeitintervalle ihrer Rotationsperioden aus der Öffnung (22) herausragen,
wenn umgekehrt das Zubehör (1) mehrere Platten aufweist, wenn der Rahmen (3)? mit der Kipperschüttmaschine (2) verbunden ist und jede der Platten (4) sich in der ersten Position befindet, verschließen die Platten (4) als Ganzes die Öffnung (22) zumindest teilweise, sodass sich alle Flagellen (24) der Mehrzahl bei einer Drehung des Schaftes (23) um die erste Achse, anstatt aus der Öffnung (22) herauszuragen, an den jeweiligen Endabschnitten und während der jeweiligen Zeitintervalle ihrer Rotationsperioden gegen die Platten (4) stoßen,
wobei jeweils ein oder mehrere der Platten (4) mit dem Rahmen (3) verbunden sind, sodass, wenn der Rahmen (3) mit der Kipperschüttmaschine (2) während eines Kipperschüttvorgangs der Kipperschüttmaschine (2) verbunden ist und die Platte (4) sich in der zweiten Position, bei einer Bewegung der Kipperschüttmaschine (2) parallel zum Boden, befindet, neigt ein Aufprall der Platte (4) auf den Stamm (28, 29, 30) einer Pflanze dazu, dass die Platte (4) in die erste Position gedreht wird.

2. Zubehöhr (1) nach Anspruch 1, **dadurch gekennzeichnet, dass** der Rahmen (3) Folgendes umfasst :
∘ eine erste lasttragende Struktur (5), die mit der Kipperschüttmaschine (2) verbunden werden kann, sodass sie relativ zu dieser um eine dritte Rotationsachse drehen kann,
wobei der Rahmen (3) daher mit der Kipperschüttmaschine (2) bei der ersten lasttragenden Struktur (5) verbindbar ist,
wenn die erste lasttragende Struktur (5) mit der Kipperschüttmaschine (2) verbunden ist, ist die dritte Rotationsachse nicht orthogonal zur ersten Rotationsachse ;
∘ erste Befestigungsmittel (25), die auf die erste lasttragende Struktur (5) und die Kipperschüttmaschine (2) aufgebracht werden können,
wobei wenn die erste lasttragende Struktur (5) mit der Kipperschüttmaschine verbunden ist, werden die ersten Befestigungsmittel (25) an der ersten lasttragenden Struktur (5) und an der Kipperschüttmaschine (2) angebracht und geeignet sind, eine Drehung zwischen der ersten lasttragenden Struktur (5) und der Kipperschüttmaschine (5) zu verhindern, um sie miteinander zu verbinden,
wobei die ersten Befestigungsmittel (25), wenn sie an der ersten lasttragenden Struktur (5) und an der Kipperschüttmaschine (2) angebracht werden, ferner:
- von der ersten lasttragenden Struktur (5) und/oder von der Kipperschüttmaschine (2) entfernbar sind, um eine Drehung zwischen der ersten lasttragenden Struktur (5) und der Kipperschüttmaschine (2) zu gestatten
und anschließend
- an der ersten lasttragenden Struktur (5) und an der Kipperschüttmaschine (2) erneut verwendbar sind, um eine weitere Drehung zwischen der ersten lasttragenden Struktur (5) und der Kippeschüttmaschine (2) zu verhindern ;
∘ eine zweite lasttragende Struktur (9), die mit der ersten lasttragenden Struktur (5) so verbunden ist, dass sie sich relativ zu dieser sowohl in einer ersten Richtung als auch in einer zweiten Richtung verschieben kann, die nicht parallel zu dieser ersten Richtung ist, wobei diese erste Richtung nicht parallel zu dieser dritten Achse ist,
wobei die zweite Richtung nicht parallel zur dritten Achse ist,
∘ zweite und dritte Befestigungsmittel, die an den ersten und zweiten lasttragenden Strukturen (5, 9) angebracht und geeignet sind, eine Translation zwischen den ersten und zweiten lasttragenden Strukturen (5, 9) in der ersten und zweiten Richtung resp. zu verhindern, um die erste und zweite lasttragende Struktur (5, 9) miteinander zu verbinden,
wobei bezüglich der zweiten und dritten Befestigungsmittel, bedeutet es dass sie unabhängig voneinander sind, also :
- von der ersten und/oder zweiten lasttragenden Struktur (5, 9) entfernbar sind, um eine Translation zwischen der ersten und zweiten lasttragenden Struktur (5, 9) jeweils entlang der ersten und zweiten Richtung. zu gestatten
und anschließend
- an der ersten und zweiten lasttragenden Strukturen (5, 9) erneut anwendbar sind, um eine erneute Translation zwischen den ersten und zweiten lasttragenden Strukturen (5, 9) jeweils entlang der ersten und zweiten Richtung zu verhindern,
wobei jede der einen oder mehreren Platten (4) mit dem Rahmen (3) bei der zweiten last tragenden Struktur (9) so verbunden sind, dass die zweite Rotationsachse der Platte (4) nicht parallel zur dritten Achse ist.

3. Zubehör (1) nach Anspruch 2, **dadurch gekennzeichnet, dass** die erste lasttragende Struktur (5) mit der Kipperschüttmaschine (2) verbindbar ist, sodass die dritte Achse parallel zur ersten Achse ist,
wobei die ersten und zweiten Richtungen orthogonal zueinander sind,
wobei die ersten und zweiten Richtungen jeweils orthogonal zur dritten Achse sind,
wobei für jede der einen oder mehreren Platten (4) ist die zweite Rotationsachse orthogonal zur dritten Achse.

4. Zubehör (1) nach Anspruch 3, **dadurch gekennzeichnet, dass** für jede der einen oder mehreren Platten (4), ist die zweite Rotationsachse orthogonal zur zweiten Richtung.

5. Zubehör (1) nach einem der Ansprüche 2 bis 4, **dadurch gekennzeichnet, dass** der Rahmen (2) mit der zweiten lasttragenden Struktur (9) verbundene Abstandshaltermittel (26) aufweist,
wobei jeweils eine oder mehrere der Platten (4), wenn sie sich in der ersten Position befinden, und die Abstandhaltermittel (26) sich weg von der zweiten lasttragenden Struktur (9) im Wesentlichen in die gleiche Richtung erstrecken,
wobei die Abstandhaltermittel (26) sich weg von der zweiten lasttragenden Struktur (9), mehr als jede der einen oder mehreren Platten (4), erstrecken, wenn sie sich in der ersten Position befinden.

6. Zubehör (1) nach einem der Ansprüche 2 bis 5, **dadurch gekennzeichnet, dass** die ersten Befestigungsmittel mindestens einen ersten Aktuator (25) umfassen, der mit der ersten lasttragenden Struktur (5) und der Kipperschüttmaschine (2) verbunden werden kann, sodass, wenn die erste lasttragende Struktur (5) mit der Kipperschüttmaschine (2) verbunden ist, bewirkt eine Betätigung des ersten Aktuators (25) eine Drehung der ersten lasttragenden Struktur (5) relativ zur Kipperschüttmaschine (2) um die dritte Achse,
wenn die erste lasttragende Struktur (5) mit der Kipperschüttmaschine (2) verbunden ist, ist der erste Aktuator (25) mit der ersten lasttragenden Struktur (5) und mit der Kipperschüttmaschine (2) verbunden,
wobei der erste Aktuator (25), wenn er mit der ersten lasttragenden Struktur (5) und der Kipperschüttmaschine (2) verbunden und nicht betätigt ist, eine Drehung zwischen der ersten lasttragenden Struktur (5) und der Kippschüttmaschine (2) verhindert,
wobei eine Betätigung des ersten Aktuators (25) einer Ablösung der ersten Befestigungsmittel von der ersten lasttragenden Struktur (5) und/oder von der Kippschüttmaschine (2) entspricht,
wobei ein Stopp des ersten Aktuators (25) nach dessen Betätigung, einer erneuten Anbringung der ersten Befestigungsmittel an der ersten lasttragenden Struktur (5) und an der Kippschüttmaschine (2) entspricht.

7. Zubehör nach einem der Ansprüche 2 bis 6, **dadurch gekennzeichnet, dass** die zweiten Befestigungsmittel mindestens einen zweiten Aktuator umfassen, der mit der ersten und zweiten lasttragenden Struktur (5, 9) verbunden ist, sodass eine Betätigung des zweiten Aktuators eine Translation der zweiten lasttragenden Struktur (9) relativ zur ersten lasttragenden Struktur (5) in der ersten Richtung bewirkt,
wobei der zweite Aktuator im nicht betätigten Zustand eine Translation der zweiten lasttragenden Struktur (9) relativ zur ersten lasttragenden Struktur (5) in der ersten Richtung verhindert,
wobei eine Betätigung des zweiten Aktuators einer Ablösung der zweiten Befestigungsmittel von der ersten und/oder zweiten lasttragenden Struktur (5, 9) entspricht,
wobei ein Stopp des zweiten Aktuators nach dessen Betätigung einer erneuten Anbringung der zweiten Befestigungsmittel an der ersten und zweiten lasttragenden Struktur (5, 9) entspricht.

8. Zubehör nach einem der Ansprüche 2 bis 7, **dadurch gekennzeichnet, dass** die dritten Befestigungsmittel mindestens einen dritten Aktuator umfassen, der mit der ersten und zweiten lasttragenden Struktur (5, 9) verbunden ist, sodass eine Betätigung des dritten Aktuators eine Translation der zweiten lasttragenden Struktur (9) relativ zur ersten lasttragenden Struktur (5) in der zweiten Richtung bewirkt,
wobei der dritte Aktuator, im nicht betätigten Zustand eine Translation der zweiten lasttragenden Struktur (9) relativ zur ersten lasttragenden Struktur (5) in der zweiten Richtung verhindert,
wobei eine Betätigung des dritten Aktuators einer Ablösung der dritten Befestigungsmittel von der ersten und/oder zweiten lasttragenden Struktur (5, 9) entspricht,
wobei ein Stopp des dritten Aktuators nach dessen Betätigung einer erneuten Anbringung der dritten Befestigungsmittel an der ersten und zweiten lasttragenden Struktur (5, 9) entspricht.

9. Zubehör (1) nach einem der vorhergehenden Ansprüche, **dadurch gekennzeichnet, dass** das Zubehör (1) eine Mehrzahl von Platten (4) umfasst, wobei die zweiten Achsen liegen in einer Ebene und zueinander parallel sind.

10. Gerät (20) umfassend:
∘ eine Kipperschüttmaschine (2) einschließlich:
- eines Gehäuses (21), das einen Sitz zumindest teilweise begrenzt,
wobei das Gehäuse (21) mindestens eine Öffnung (22) für den Zugang zu diesem Sitz umfasst,
wobei die Kipperschüttmaschine (2) dem Stamm (28, 29, 30) einer Pflanze bei der Öffnung (22) gegenüberliegt ;
- eines Schafts (23), der in dem Sitz untergebracht und um eine erste Rotationsachse drehbar ist;
- einer Mehrzahl von Flagellen (24), von denen jede an ihrem ersten Ende mit dem Schaft (23) verbunden ist, wobei nach einer Drehung des Schaftes (23) um die erste Achse ragt jede der Flagellen (24) während eines Zeitintervalls ihrer eigenen Rotationsperiode bei mindestens einer ihrer Endabschnitte aus der Öffnung (22) heraus, und ein zweites Ende dieses Flagellums (24) aufweist, das gegenüber dem ersten Ende desselben liegt,
∘ ein Zubehör (1) nach einem der vorhergehenden Ansprüche, wobei der Rahmen (3) mit der Kipperschüttmaschine (2) verbunden ist.

## Revendications

1. Dispositif (1) pouvant être connecté à une machine de basculement de pousses (2),
ladite machine de basculement de pousses (2) comprenant :
• un boîtier (21) délimitant au moins partiellement un siège,
ledit boîtier (21) comprenant au moins une ouverture (22) pour accéder audit siège, ladite machine de basculement de pousses (2) étant opposée à la tige (28, 29, 30) d'une plante au niveau de ladite ouverture (22) ;
• un arbre (23) logé dans ledit siège et rotatif autour d'un premier axe de rotation ;
• une pluralité de fléaux (24), chacun étant relié audit arbre (23) à une première extrémité de celui-ci,
lors d'une rotation dudit arbre (23) autour dudit premier axe, chacun desdits fléaux (24), pendant un intervalle de temps de la période de rotation de ceux-ci, dépassant de ladite ouverture (22) à au moins une de ses extrémités, incluant une deuxième extrémité dudit fléau (24) opposée à ladite première extrémité de celui-ci,
ledit dispositif (1) étant **caractérisé en ce qu'**il comprend :
• un cadre (3) pouvant être connecté à ladite machine de basculement de pousses (2) ;
• une ou plusieurs plaques (4), chacune étant reliée audit cadre (3) de manière à tourner autour d'un deuxième axe de rotation,
chacune desdites une ou plusieurs plaques (4) étant également reliée audit cadre (3) de sorte que lorsque ledit cadre (3) est relié à ladite machine de basculement de pousses (2) :
- chacune desdites une ou plusieurs plaques (4) est au moins partiellement opposée à ladite ouverture (2),
- lors d'une opération de basculement de pousses effectuée avec ladite machine de basculement de pousses (2), chacune desdites une ou plusieurs plaques (4) n'est pas en contact avec le sol
et
- lorsque ladite machine à épointer les pousses (2) est opposée à la tige (28, 29, 30) d'une plante au niveau de ladite ouverture (22), au moins une desdites plaques (4) est au moins partiellement interposée entre ladite ouverture (22) et la tige (28, 29, 30) de ladite plante,
chacune desdites une ou plusieurs plaques (4) étant rotative par rapport au dit cadre (3), autour dudit deuxième axe, entre au moins :
- une première position dans laquelle, lorsque ledit cadre (3) est connecté à ladite machine de basculement de pousses (2), ladite plaque (4) obstrue au moins partiellement ladite ouverture (22) de sorte que, lors d'une rotation dudit arbre (23) autour dudit premier axe, au lieu de dépasser de ladite ouverture (22), au moins un groupe de fléaux (24) de ladite pluralité heurte ladite plaque (4) au niveau desdites extrémités desdits fléaux (24) dudit groupe, respectivement, et pendant lesdits intervalles de temps desdites périodes de rotation desdits fléaux (24) dudit groupe, respectivement,
et
- une deuxième position dans laquelle, lorsque ledit cadre (3) est connecté à ladite machine de basculement de pousses (2), ladite plaque (4) n'obstrue pas, ou seulement partiellement, ladite ouverture (22) de sorte que, lors d'une rotation dudit arbre (23) autour dudit premier axe, certains ou tous les fléaux (24) desdits groupes dépassent de ladite ouverture (22) aux dites extrémités respectives et pendant lesdits intervalles de temps respectifs des périodes de rotation de celles-ci,
lorsque ledit cadre (3) est connecté à ladite machine de basculement de pousse (2), un impact des fléaux (24) dudit groupe contre ladite plaque (4) lorsque cette dernière est dans ladite première position tendant à faire tourner ladite plaque (4) vers ladite deuxième position,
si ledit dispositif (1) ne comprend qu'une seule desdites plaques (4) :
- lorsque ledit cadre (3) est relié à ladite machine de basculement de pousses (2) et que cette dernière est opposée à la tige (28, 29, 30) d'une plante au niveau de ladite ouverture (22), ladite plaque (4) est au moins partiellement interposée entre ladite ouverture (22) et ladite tige (28, 29, 30) de ladite plante,
- lorsque ledit cadre (3) est connecté à ladite machine de basculement de pousses (2) et ladite plaque (4) se trouve dans ladite première position, ladite plaque (4) obstrue au moins partiellement ladite ouverture (22) de sorte que, lors d'une rotation dudit arbre (23) autour dudit premier axe, plutôt que de dépasser de ladite ouverture (22), tous les fléaux (24) de ladite pluralité heurtent ladite plaque (4) à leurs extrémités respectives et pendant lesdits intervalles de temps respectifs des périodes de rotation de celles-ci,
et
- lorsque ledit cadre (3) est connecté à ladite machine de basculement de pousses (2) et la plaque (4) se trouve dans ladite deuxième position, ladite plaque (4) n'obstrue pas, ou seulement partiellement, ladite ouverture (22), de sorte que, lors d'une rotation dudit arbre (23) autour dudit premier axe, au moins certains des fléaux (24) de ladite pluralité dépassent de ladite ouverture (22) à leurs parties d'extrémité respectives et pendant lesdits intervalles de temps respectifs des périodes de rotation de celles-ci ;
au contraire, si ledit dispositif (1) comprend une pluralité desdites plaques, lorsque ledit cadre (3) est relié à ladite machine de basculement de pousses (2) et chacune desdites plaques (4) se trouve dans ladite première position, lesdites plaques (4), prises dans leur ensemble, obstruent au moins partiellement ladite ouverture (22), de sorte que, lors d'une rotation dudit arbre (23) autour dudit premier axe, au lieu de dépasser de ladite ouverture (22), tous les fléaux (24) de ladite pluralité heurtent lesdites plaques (4) à leurs extrémités respectives et pendant lesdits intervalles de temps respectifs des périodes de rotation de celles-ci, chacune desdites une ou plusieurs plaques (4) étant reliée audit cadre (3) de sorte que, lorsque ledit cadre (3) est connecté à ladite machine de basculement de pousses (2) lors d'une opération de basculement de pousses effectuée avec ladite machine de basculement de pousses (2) et ladite plaque (4) se trouve dans ladite deuxième position, lors d'un mouvement de ladite machine de basculement de pousses (2) parallèle au sol, un impact de ladite plaque (4) contre ladite tige (28, 29, 30) d'une plante tend à faire tourner ladite plaque (4) dans ladite première position.

2. Dispositif (1) selon la revendication 1, **caractérisé en ce que** ledit cadre (3) comprend :
• une première structure porteuse de charge (5) connectable à ladite machine de basculement de pousses (2) de manière à tourner par rapport à cette dernière autour d'un troisième axe de rotation, ledit cadre (3) étant ainsi connectable à ladite machine de basculement de pousses (2) au niveau de ladite première structure porteuse de charge (5), lorsque ladite première structure porteuse de charge (5) est connectée à ladite machine de basculement de pousses (2), ledit troisième axe de rotation n'étant pas orthogonal audit premier axe de rotation ;
• des premiers moyens de fixation (25) pouvant être appliqués à ladite première structure porteuse de charge (5) et à ladite machine de basculement de pousses (2), lorsque ladite première structure porteuse de charge (5) est reliée à ladite machine de basculement de pousses (2), lesdits premiers moyens de fixation (25) étant appliqués à ladite première structure porteuse de charge (5) et ladite machine de basculement de pousses (2) étant adaptée pour empêcher une rotation entre ladite première structure porteuse de charge (5) et ladite machine de basculement de pousses (5) afin de les relier intégralement l'une à l'autre, lesdits premiers moyens de fixation (25), lorsqu'ils sont appliqués à ladite première structure porteuse de charge (5) et à ladite machine de basculement de pousses (2), étant également :
- amovibles de ladite première structure porteuse de charge (5) et/ou de ladite machine de basculement de pousses (2) afin de permettre une rotation entre ladite première structure porteuse de charge (5) et ladite machine de basculement de pousses (2),
et puis
- réappliqués à ladite première structure porteuse de charge (5) et à ladite machine de basculement de pousses (2) afin d'empêcher à nouveau une rotation entre ladite première structure porteuse de charge (5) et ladite machine de basculement de pousses (2) ;
• une deuxième structure porteuse de charge (9) reliée à ladite première structure porteuse de charge (5) de manière à se déplacer, par rapport à cette dernière, dans une première direction et une deuxième direction non parallèle à ladite première direction,
ladite première direction n'étant pas parallèle audit troisième axe,
ladite deuxième direction n'étant pas parallèle audit troisième axe,
• deuxièmes et troisièmes moyens de fixation appliqués auxdites première et deuxième structures porteuses de charge (5, 9) et adaptés pour empêcher une translation entre lesdites première et deuxième structures porteuses de charge (5, 9) dans lesdites première et deuxième directions, respectivement, de manière à relier intégralement lesdites première et deuxième structures porteuses de charge (5, 9) l'une à l'autre, lesdits deuxième et troisième moyens de fixation étant, indépendamment l'un de l'autre, aussi étant :
- amovibles desdites première et/ou deuxième structures porteuses de charge (5, 9) afin de permettre une translation entre lesdites première et deuxième structures porteuses de charge (5, 9) selon lesdites première et deuxième directions, respectivement,
et puis
- réappliqués auxdites première et deuxième structures porteuses de charge (5, 9) afin d'empêcher à nouveau une translation entre lesdites première et deuxième structures porteuses de charge (5, 9) selon lesdites première et deuxième directions, respectivement,
chacune desdites une ou plusieurs plaques (4) étant reliée audit cadre (3) près de ladite deuxième structure porteuse de charge (9) et de sorte que ledit deuxième axe de rotation de ladite plaque (4) ne soit pas parallèle audit troisième axe.

3. Dispositif (1) selon la revendication 2, **caractérisé en ce que** ladite première structure porteuse de charge (5) est connectable à ladite machine de basculement de pousses (2) de sorte que ledit troisième axe soit parallèle audit premier axe,
lesdites première et deuxième directions étant orthogonales l'une à l'autre,
chacune desdites première et deuxième directions étant orthogonales audit troisième axe,
pour chacune desdites une ou plusieurs plaques (4), ledit deuxième axe de rotation étant orthogonal audit troisième axe.

4. Dispositif (1) selon la revendication 3, **caractérisé en ce que**, pour chacune desdites une ou plusieurs plaques (4), ledit deuxième axe de rotation est orthogonal à ladite deuxième direction.

5. Dispositif (1) selon l'une des revendications 2 à 4, **caractérisé en ce que** ledit cadre (2) comprend des moyens d'espacement (26) reliés à ladite deuxième structure porteuse de charge (9),
à la fois à chacune desdites une ou plusieurs plaques (4), lorsqu'elles sont dans ladite première position, et lesdits moyens d'espacement (26) s'étendant à partir de ladite deuxième structure porteuse de charge (9) sensiblement dans la même direction,
lesdits moyens d'espacement (26) s'étendant à partir de ladite deuxième structure porteuse de charge (9) plus que chacune desdites une ou plusieurs plaques (4) ne s'étend à partir de ladite structure porteuse de charge (9) lorsqu'elles sont dans ladite première position.

6. Dispositif (1) selon l'une des revendications 2 à 5, **caractérisé en ce que** lesdits premiers moyens de fixation comprennent au moins un premier actionneur (25) connectable à ladite première structure porteuse de charge (5) et à ladite machine de basculement de pousses (2), de sorte que, lorsque ladite première structure porteuse de charge (5) est connectée à ladite machine de basculement de pousses (2), un actionnement dudit premier actionneur (25) entraîne une rotation de ladite première structure porteuse de charge (5) par rapport à ladite machine de basculement de pousses (2) autour dudit troisième axe,
lorsque ladite première structure porteuse de charge (5) est connectée à ladite machine de basculement de pousses (2), ledit premier actionneur (25) étant connecté à ladite première structure porteuse de charge (5) et à ladite machine de basculement de pousses (2),
ledit premier actionneur (25), lorsqu'il est connecté à ladite première structure porteuse de charge (5) et à ladite machine de basculement de pousses (2) et non est actionnée, empêchant une rotation entre ladite première structure porteuse de charge (5) et ladite machine de basculement de pousses (2),
un actionnement dudit premier actionneur (25) correspondant à un retrait desdits premiers moyens de fixation de ladite première structure porteuse de charge (5) et/ou de ladite machine de basculement de pousses (2),
un arrêt dudit premier actionneur (25) suite à un actionnement de celui-ci correspondant à une ré-application desdits premiers moyens de fixation à ladite première structure porteuse de charge (5) et à ladite machine de basculement de pousses (2).

7. Dispositif selon l'une des revendications 2 à 6, **caractérisé en ce que** lesdits deuxièmes moyens de fixation comprennent au moins un deuxième actionneur relié auxdites première et deuxième structures porteuses de charge (5, 9) de sorte qu'un actionnement dudit deuxième actionneur entraîne une translation de ladite deuxième structure porteuse de charge (9) par rapport à ladite première structure porteuse de charge (5) dans ladite première direction,
ledit deuxième actionneur, lorsqu'il n'est pas actionné, empêchant une translation de ladite deuxième structure porteuse de charge (9) par rapport à ladite première structure porteuse de charge (5) dans ladite première direction,
un actionnement dudit deuxième actionneur correspondant à un retrait desdits deuxièmes moyens de fixation desdites première et/ou deuxième structures porteuses de charge (5, 9),
un arrêt dudit deuxième actionneur suite à son actionnement correspondant à une ré-application desdits deuxièmes moyens de fixation sur lesdites première et deuxième structures porteuses de charge (5, 9).

8. Dispositif selon l'une des revendications 2 à 7, **caractérisé en ce que** lesdits troisièmes moyens de fixation comprennent au moins un troisième actionneur relié auxdites première et deuxième structures porteuses de charge (5, 9) de sorte qu'un actionnement dudit troisième actionneur entraîne une translation de ladite deuxième structure porteuse de charge (9) par rapport à ladite première structure porteuse de charge (5) dans ladite deuxième direction,
ledit troisième actionneur, lorsqu'il n'est pas actionné, empêchant une translation de ladite deuxième structure porteuse de charge (9) par rapport à ladite première structure porteuse de charge (5) dans ladite deuxième direction,
un actionnement dudit troisième actionneur correspondant à un retrait desdits troisièmes moyens de fixation desdites première et/ou deuxième structures porteuses de charge (5, 9),
un arrêt dudit troisième actionneur suite à son actionnement correspondant à une ré-application desdits troisièmes moyens de fixation par rapport auxdites première et/ou deuxième structures porteuses de charge (5, 9),

9. Dispositif (1) selon l'une des revendications précédentes, **caractérisé en ce que**, si ledit dispositif (1) comprend une pluralité desdites plaques (4), lesdits deuxièmes axes sont coplanaires et mutuellement parallèles.

10. Appareil (20) comprenant :
• une machine de basculement de pousses (2) comprenant :
- un boîtier (21) délimitant au moins partiellement un siège,
ledit boîtier (21) comprenant au moins une ouverture (22) pour accéder audit siège,
ladite machine de basculement de pousses (2) étant opposée à la tige (28, 29, 30) d'une plante au niveau de ladite ouverture (22) ;
- un arbre (23) logé dans ledit siège et rotatif autour d'un premier axe de rotation ;
- une pluralité de fléaux (24), chacun étant relié audit arbre (23) à une première extrémité de celui-ci,
lors d'une rotation dudit arbre (23) autour dudit premier axe, chacun desdits fléaux (24), pendant un intervalle de temps de la période de rotation de celui-ci, dépassant de ladite ouverture (22) à au moins une partie d'extrémité de celle-ci, y compris une deuxième extrémité dudit fléau (24) opposée à ladite première extrémité de celui-ci ;
• un dispositif (1) selon l'une des revendications précédentes, avec ledit cadre (3) relié à ladite machine de basculement de pousses (2).
